(19) Europäisches Patentamt
European Patent Office
Office européen des brevets

(11) **EP 3 651 249 B1**

(12) **EUROPEAN PATENT SPECIFICATION**

(45) Date of publication and mention
of the grant of the patent:
**25.12.2024 Bulletin 2024/52**

(21) Application number: **18842887.4**

(22) Date of filing: **25.07.2018**

(51) International Patent Classification (IPC):
*H01M 4/73* $^{(2006.01)}$     *H01M 10/12* $^{(2006.01)}$

(52) Cooperative Patent Classification (CPC):
**H01M 10/12; H01M 4/73;** Y02E 60/10; Y02P 70/50

(86) International application number:
**PCT/JP2018/027868**

(87) International publication number:
**WO 2019/031241 (14.02.2019 Gazette 2019/07)**

(54) **LEAD-ACID BATTERY GRID AND LEAD-ACID BATTERY**

GITTER EINER BLEISÄUREBATTERIE UND BLEISÄUREBATTERIE

GRILLE DE BATTERIE AU PLOMB ET BATTERIE AU PLOMB

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.08.2017 JP 2017153745**

(43) Date of publication of application:
**13.05.2020 Bulletin 2020/20**

(73) Proprietor: **GS Yuasa International Ltd.
Kyoto-shi, Kyoto 601-8520 (JP)**

(72) Inventors:
• **HAZE, Akinori
Kyoto-shi
Kyoto 601-8520 (JP)**
• **FUJITA, Kohei
Kyoto-shi
Kyoto 601-8520 (JP)**
• **OBUCHI, Susumu
Kyoto-shi
Kyoto 601-8520 (JP)**

(74) Representative: **Isarpatent
Patent- und Rechtsanwälte Barth
Charles Hassa Peckmann & Partner mbB
Friedrichstrasse 31
80801 München (DE)**

(56) References cited:
CN-A- 102 780 007     CN-U- 202 817 102
CN-U- 206 364 115     DE-A1- 102008 029 386
GB-A- 719 598          JP-A- S6 084 770
JP-U- S5 386 329       JP-U- S5 386 329

**Description**

TECHNICAL FIELD

A technique disclosed in the present description relates to a lead-acid battery grid.

BACKGROUND ART

The lead-acid battery grid includes a positive electrode plate, a negative electrode plate (hereinafter also referred to as "plate"), and a separator that is disposed between the positive electrode plate and the negative electrode plate and electrically insulates the positive electrode plate and the negative electrode plate. Each plate includes a grid and an active material applied to the grid. The grid includes a frame having four sides and a grid rib disposed on the inner peripheral side of the frame and interconnected by a plurality of nodes (cf., for example, Patent Document 1).

Patent Document 2 describes a cathode plate grid of a lead-acid storage battery for an electric vehicle.
Patent Document 3 describes an antimony free lead-acid battery.
Patent Document 4 describes an electrode plate grid of a lead-acid battery.
Patent Document 5 describes a lead grid for a lead-acid battery utilized for stationary application.

PRIOR ART DOCUMENT

PATENT DOCUMENT

Patent Document 1: JP-A-2013-16499
Patent Document 2: CN-U-202 817 102
Patent Document 3: JP-A- S60-84770
Patent Document 4: JP-U-S53-86329
Patent Document 5: DE-A1-10-2008-029386

SUMMARY OF THE INVENTION

PROBLEMS TO BE SOLVED BY THE INVENTION

For example, when the lead-acid battery is used for a long period of time, the grid rib (hereinafter referred to as "inner rib") corrodes (e.g., oxidative corrosion), thereby causes a phenomenon in which the inner rib extends along the axial direction of the inner rib (hereinafter referred to as "the growth of the inner rib"). The inventor of the present application has newly found that the growth of the inner rib causes a phenomenon in which the frame is deformed so that the vertex of the frame faces one side in a direction substantially orthogonal to the grid (hereinafter referred to as "the deformation of the vertex"). The vertex of the frame is a portion where adjacent frame ribs, of the four frame ribs respectively constituting the four sides of the frame, are connected. That the vertex faces one side in a direction substantially orthogonal to the grid means that the vertex is located on one side in the direction substantially orthogonal to the grid more than the periphery of the vertex of each of two frame ribs sharing the vertex. When the deformation of the vertex occurs, the active material applied to the periphery of the deformed vertex easily peels off, and when the active material peels off, for example, the corrosion of the grid progresses at a location where the inner rib is exposed, and there is a possibility that the strength of the grid decreases significantly.
The present specification discloses a technique capable of solving the problem described above.

MEANS FOR SOLVING THE PROBLEMS

The scope of the present invention is defined by the independent claim. A lead-acid battery grid includes: a quadrangular frame including a first frame rib with a length F1 that extends in a first direction and a second frame rib with a length F2 that extends in a second direction intersecting the first direction and is connected with the first frame rib at a first vertex; and an inner parts disposed on an inner peripheral side of the frame, and including a plurality of first inner ribs that extend toward the first frame rib, and a plurality second inner ribs that extend toward the second frame rib. L1 is the number of first inner ribs (L1 is an integer of 2 or more), extending toward a first vertex-side portion of the first frame rib among the first frame ribs, that is a portion from a position of the first vertex to a position separated by a first reference length being shorter than both a half of the length F1 and a half of the length F2, the first inner ribs extending over at least three of the second inner ribs, M1 is the number of first inner ribs (M1 is an integer of 1 or more being located between a specific second inner rib that is closest to the first frame rib among the at least three of the second inner ribs and the first vertex-side portion of the first frame rib, and being connected to both the specific second inner rib and the first vertex-side portion of the first frame rib, P1 is the number of second inner ribs (P1 is an integer of 2 or more extending toward a first vertex-side portion of the second frame rib that is the portion from a position of the first vertex to a position separated by the first reference length, and extending over at least three of the first inner ribs, Q1 is the number of second inner ribs (Q1 is an integer of 1 or more and smaller than P1) being located between a specific first inner rib that is closest to the second frame rib among the at least three of the first inner ribs and the first vertex-side portion of the second frame rib, and being connected to both the specific first inner rib and the first vertex-side portion of the second frame rib, and a relational expression shown in (1) below holds:

$$(M1/L1) > (Q1/P1) \quad (1)$$

BRIEF DESCRIPTION OF THE DRAWINGS

Fig. 1 is a perspective view showing an external configuration of a lead-acid battery 100 in the present embodiment.
Fig. 2 is an explanatory view showing a YZ cross-sectional configuration of the lead-acid battery 100 at a position II-II in Fig. 1.
Fig. 3 is an explanatory view showing a YZ plane configuration of a grid 140 of the present embodiment.
Fig. 4 is an explanatory view showing, in an enlarged manner, a YZ plane configuration of a portion in the vicinity of a first vertex C1 in the grid 140 of the present embodiment.
Fig. 5 is an explanatory view showing, in an enlarged manner, a YZ plane configuration of a portion in the vicinity of a second vertex C2 in the grid 140 of the present embodiment.
Fig. 6 is an explanatory view showing, in an enlarged manner, a YZ plane configuration of a portion in the vicinity of a first vertex C1 in a grid 140X of a comparative example.
Fig. 7 is an explanatory view showing, in an enlarged manner, a YZ plane configuration of a portion in the vicinity of a first vertex C1 in a grid 140A of a first modification of the present embodiment.
Fig. 8 is an explanatory view showing, in an enlarged manner, a YZ plane configuration of a portion in the vicinity of a first vertex C1 in a grid 140B of a second modification of the present embodiment.
Fig. 9 is an explanatory view showing, in an enlarged manner, a YZ plane configuration of a portion in the vicinity of a first vertex C1 in a grid 140C of a third modification of the present embodiment.
Fig. 10 is an explanatory view showing, in an enlarged manner, a YZ plane configuration of a portion in the vicinity of a first vertex C1 in a grid 140D of a fourth modification of the present embodiment.
Fig. 11 is an explanatory view showing, in an enlarged manner, a YZ plane configuration of a portion in the vicinity of a first vertex C1 in a grid 140E of a fifth modification of the present embodiment.

MODES FOR CARRYING OUT THE INVENTION

The technique disclosed in the present description can be implemented as the following forms.
As described above, when the growth of the inner rib occurs, the deformation of the vertex occurs. Hereinafter, an occurrence principle for the deformation of the vertex will be described. When the growth of the inner rib occurs, a force that presses the frame rib connected to the inner rib (hereinafter referred to as "pressing force due to the growth of the inner rib") is generated. One of four vertices of a frame is a first vertex. Of the four frame ribs constituting the frame, two frame ribs sharing the first vertex are a first frame rib and a second frame rib. Of inner ribs located inside the frame, an inner rib extending toward the first frame rib is a first inner rib, and an inner rib extending toward the second frame rib is a second inner rib. In this case, the first frame rib receives a pressing force due to the growth of the first inner rib connected to the first frame rib out of the first inner ribs, and the second frame rib receives a pressing force due to the growth of the second inner rib connected to the second frame rib out of the second inner ribs.
Here, when the grid is a perfect plane, both the first frame rib and the second frame rib are deformed so as to swell toward the outer peripheral side of the frame flush with the grid, and hence the first vertex is located flush with the periphery of the first vertex. That is, no deformation of the vertex occurs at the first vertex. However, in practice, it is difficult to form a grid to be a perfect plane, and there is distortion in the frame, or distortion in the inner rib caused by variations in amount of an active material applied to each side of the grid. As thus described, in a case where there is distortion in the grid, when the frame receives a pressing force due to the growth of the inner rib, the frame is deformed so that the tip portion of the frame in the acting direction of the pressing force is located on one side in a direction substantially orthogonal to the grid more than the periphery of the tip portion (the side in a specific direction corresponding to the distortion). The resultant force of the pressing force due to the growth of the first inner rib and the pressing force due to the growth of the second inner rib acts on the first vertex, and hence the first vertex becomes the tip portion of the frame in the acting direction of the resultant force. For this reason, the first vertex is located closer to the side in the specific direction than the periphery of the first vertex in the frame. That is, the deformation of the vertex occurs at the first vertex.

Next, it is considered that the deformation of the first vertex tends to appear more significantly, with a smaller absolute value of the difference between a pressing force to the first frame rib due to the growth of the first inner rib (hereinafter simply referred to as "a pressing force to the first frame rib") and a pressing force to the second frame rib due to the growth of the second inner rib (hereinafter simply referred to as "a pressing force to the second frame rib") in the vicinity of the first vertex of the frame rib. The reason for this is as follows. As described above, the deformation of the first vertex occurs when the resultant force of the pressing force due to the growth of the first inner rib and the pressing force due to the growth of the second inner rib acts on the first vertex. When the pressing force due to the growth of the first inner rib and the pressing force due to the growth of the second inner rib are the same, the first vertex becomes the tip portion of the resultant force of both pressing forces, and hence the deformation of the vertex appears most prominently. On the other hand, when the pressing force to the second frame rib is zero, only the pressing force to the first frame rib acts on the first vertex, so the tip portion in the acting direction of the pressing force to the first frame rib is the entire first frame rib including the first vertex, and as a result, not only the first vertex but also the periphery of the first vertex in the first frame rib comes to be located at substantially the same position on the side in the specific direction. That is, when one of the pressing force due to the growth of the first inner rib and the pressing force due to the growth of the second inner rib is zero, no deformation of the vertex occurs at the first vertex. From this, the deformation of the vertex becomes larger, with the smaller absolute value of the difference between the pressing force to the first frame rib and the pressing force to the second frame rib. Therefore, in the present invention, the following configuration is adopted to prevent the deformation of the vertex.

(1) A lead-acid battery grid disclosed in the present specification is a lead-acid battery grid including: a quadrangular frame including a first frame rib with a length F1 that extends in a first direction and a second frame rib with a length F2 that extends in a second direction intersecting the first direction and is connected with the first frame rib at a first vertex; and an inner part disposed on an inner peripheral side of the frame, and including a plurality of first inner ribs that extend toward the first frame rib, and a plurality second inner ribs that extend toward the second frame rib. The number of the first inner ribs is L1 (L1 is an integer of 2 or more), the first inner ribs extending toward a first vertex-side portion of the first frame rib among the first frame ribs, that is a portion from a position of the first vertex to a position separated by a first reference length being shorter than both a half of the length F1 and a half of the length F2, the first inner ribs extending over at least three of the second inner ribs. The number of the first inner ribs is M1 (M1 is an integer of 1 or more), the first inner ribs being located between a specific second inner rib that is closest to the first frame rib among the at least three of the second inner ribs and the first vertex-side portion of the first frame rib, and being connected to both the specific second inner rib and the first vertex-side portion of the first frame rib. The number of the second inner ribs is P1 (P1 is an integer of 2 or more), the second inner ribs extending toward a first vertex-side portion of the second frame rib among the second frame ribs, that is a portion from a position of the first vertex to a position separated by the first reference length of the second frame rib, and extending over at least three of the first inner ribs. The number of the second inner ribs is Q1 (Q1 is an integer of 1 or more and smaller than P1), the second inner ribs being located between a specific first inner rib that is closest to the second frame rib among the at least three of the first inner ribs and the first vertex-side portion of the second frame rib, and being connected to both the specific first inner rib and the first vertex-side portion of the second frame rib. A relational expression shown in (1) below holds:

$$(M1/L1) > (Q1/P1) \quad (1)$$

Here, each of L1, M1, P1, and Q1 above means the following.

L1: The number of the first inner ribs that extend toward the first vertex-side portion of the first frame rib, extend over at least three of the second inner ribs, and apply a pressing force due to the growth to the specific second inner rib that is closest to the first frame rib (hereinafter referred to as "a force toward the first vertex-side portion of the first frame rib").

M1: The number of the first inner ribs that transmit a force toward the first vertex-side portion of the first frame rib from the specific second inner rib to the first frame rib.

P1: The number of the second inner ribs that extend toward the first vertex-side portion of the second frame rib, extend over at least three of the first inner ribs, and apply a pressing force due to the growth to the specific first inner rib that is closest to the second frame rib (hereinafter referred to as "a force toward the first vertex-side portion of the second frame rib").

Q1: The number of the second inner ribs that transmit a force toward the first vertex-side portion of the second frame rib from the specific first inner rib to the second frame rib.

In the present lead-acid battery grid, the relational expression shown in (1) holds for L1, M1, P1, and Q1 above.

$$(M1/L1) > (Q1/P1) \quad (1)$$

M1/L1 means the ratio of the force transmitted to the first frame rib with respect to the force toward the first vertex-side portion of the first frame rib (hereinafter referred to as "the transmission ratio of the force toward the first frame rib"). Q1/P1 is the ratio of the force transmitted to the second frame rib with respect to the force toward the first vertex-side portion of the second frame rib (hereinafter referred to as "the transmission ratio of the force toward the second frame rib"). Note that the M1 first inner ribs connected to the first frame rib and the specific second inner rib have small lengths in the second direction as compared to the L1 first inner ribs extending over at least three of the second inner ribs. Further, the pressing force due to the growth of the first inner rib is larger, with a larger length of the first inner rib in the second direction. Therefore, the pressing force due to the growth of the M1 first inner ribs is small as compared to the pressing force due to the growth of the L1 first inner ribs, and the pressing force due to the growth of the M1 first inner ribs has a relatively small effect on the first frame rib. Similarly, the Q1 second inner ribs connected to the second frame rib and the specific first inner rib have small lengths in the first direction as compared to the P1 second inner ribs extending over at least three of the first inner ribs. Further, the pressing force due to the growth of the second inner rib is larger, with a larger length of the second inner rib in the first direction. Therefore, the pressing force due to the growth of the Q1 second inner ribs is small as compared to the pressing force due to the growth of the P1 second inner ribs, and the pressing force due to the growth of the Q1 second inner ribs has a relatively small effect on the second frame rib. Also, in general, in order to reduce the distortion of the lead-acid battery grid, the force toward the first vertex-side portion of the first frame rib and the force toward the first vertex-side portion of the second frame rib are almost the same.

As described above, the above relational expression (1) indicates that the transmission ratio of the force toward the second frame rib is smaller than the transmission ratio of the force toward the first frame rib. Thus, according to the present lead-acid battery grid, the absolute value of the difference between the pressing force to the first frame rib and the pressing force to the second frame rib becomes large in the vicinity of the first vertex as compared to a configuration in which the transmission ratio of the force toward the first frame rib and the transmission ratio of the force toward the second frame rib are the same ((M1/L1) = (Q1/P1)), so that it is possible to prevent the deformation of the first vertex.

The above lead-acid battery grid may be configured such that, for example, a relational expression shown in (K1) below holds for L1, M1, P1, and Q1 above:

$$L1 \geq P1 \text{ and } M1 \geq Q1, \text{ or } L1 \leq P1 \text{ and } M1 \leq Q1 \text{ (K1)}$$

This relational expression (K1) indicates that the magnitude relationship of the number of first inner ribs and the number of second inner ribs is the same between the inside of the specific first inner rib and the specific second inner rib (hereinafter referred to as "an inner portion of the specific inner ribs) and the outside of the specific first inner rib and the specific second inner rib (hereinafter referred to as "an outer portion of the specific inner ribs). Here, it is assumed that the magnitude relationship between the number of first inner ribs and the number of second inner ribs is different between the inner portion and the outer portion of the specific inner ribs. For example, it is assumed that the number of first inner ribs is smaller than the number of second inner ribs in the inner portion of the specific inner ribs, and the number of first inner ribs is equal to or larger than the number of second inner ribs in the outer portion of the specific inner ribs. (L1 < P1 and M1 ≥ Q1). In this case, the difference becomes large between the number (L1 - M1) which is the difference in the number of first inner ribs in the inner portion and the outer portion of the specific inner ribs and the number (P1 - Q1) which is the difference in the number of second inner ribs in the inner portion and the outer portion of the specific inner ribs. Specifically, the number (P1 - Q1) becomes relatively larger than (L1 - M1). When the number (P1 - Q1) becomes larger, the ratio (Q1/P1) of the number of second inner ribs in the outer portion of the specific inner ribs with respect to the number of second inner ribs in the inner portion of the specific inner ribs decreases, which may cause a decrease in the strength and an increase in the electrical resistance of the lead-acid battery grid between the specific first inner rib and the second frame rib. Therefore, as in the relational expression shown in (K1) above, when the magnitude relationship between the number of first inner ribs and the number of second inner ribs is the same between the inner portion and the outer portion of the specific inner ribs, it is possible to prevent a decrease in the strength and an increase in the electrical resistance of the lead-acid battery grid, as compared to a case where the magnitude relationship is different between the inner portion and the outer portion of the specific inner ribs.

Further, in the present lead-acid battery grid, for preventing the deformation of the first vertex, a space continuously connected in the second direction (hereinafter referred to as "continuous space") is formed by the absence of the second inner rib connecting the specific first inner rib and the first vertex-side portion of the second frame rib. That is, in the present lead-acid battery grid, a continuous space exists in the outer portion of the specific inner ribs (a position closest to the second frame rib). If the continuous space does not exist in the outer portion of the specific inner ribs, the pressing force due to the growth of the second inner rib interposed between the second frame rib and the continuous space is transmitted to the second frame rib. Hence the preventive effect for the pressing force to the second frame rib by the continuous space decreases, whereby the absolute value of the difference between the pressing force to the first frame rib and the pressing force to the second frame rib cannot be made large, and the deformation of the first vertex may not be prevented. In the present embodiment, since the pressing force to the second frame rib is reduced due to the existence of the continuous space in the outer portion of the specific inner ribs, the deformation of the first vertex can be prevented.

(2) The above lead-acid battery grid may be configured such that in a view along the second direction, at least some of the M1 first inner ribs are located on the second frame rib side with respect to a center of the first vertex-side portion of the first frame rib, and in the view along the first direction, all the Q1 second inner ribs are located on a side opposite to the first frame rib with respect to a center of the first vertex-side portion of the second frame rib. That is, according to the present lead-acid battery grid, the continuous space existing between the specific first inner rib and the first vertex-side portion of the second frame rib is at a position closest to the first vertex. For this reason, as compared to the configuration in which the continuous space exists at a position separated from the first vertex, the absolute value of the difference between the pressing force to the first frame rib and the pressing force to the second frame rib at a position close to the first vertex becomes large, so that the deformation of the first vertex can be prevented more effectively.

(3) The above lead-acid battery grid may be configured such that in the view along the first direction, at least two or more second inner ribs of the P1 second inner ribs are located in at least one of a position between the first frame rib and one of the Q1 second inner ribs, adjacent to each other in the second direction, and a position between two adjacent second inner ribs of the Q1 second inner ribs. That is, in the present lead-acid battery grid, the width of the continuous space in the second direction is approximately three times or more an average interval between the second inner ribs in the inner portion of the specific inner ribs. Here, the larger the width of the continuous space in the second direction, the more greatly the specific first inner rib constituting the continuous space is bent, and the pressing force due to the growth of the second inner rib can thus be effectively absorbed by the specific first inner rib, so that the pressing force to the second frame rib can be reduced more effectively. Therefore, according to the present lead-acid battery grid, as compared to a configuration in which the width of the continuous space in the second direction is less than three times the average interval, the absolute value of the difference between the pressing force to the first frame rib and the pressing force to the second frame rib becomes still larger, so that the deformation of the first vertex can be prevented more effectively.

(4) The above lead-acid battery grid may be configured such that in the view along the first direction, (P1 - Q1) second inner ribs of the P1 second inner ribs are located in at least one of a position between the first frame rib and one of the Q1 second inner ribs, adjacent to each other in the second direction, and a position between two adjacent second inner ribs of the Q1 second inner ribs. Here, the larger the number (P1 - Q1), the larger the width of the continuous space in the second direction tends to become, and the specific first inner rib constituting the continuous space is greatly bent, thereby enabling the specific first inner rib to effectively absorb the pressing force due to the growth of the second inner rib. Hence it is possible to reduce the pressing force to the second frame rib more effectively and make large the absolute value of the difference between the pressing force to the first frame rib and the pressing force to the second frame rib. On the other hand, when the number (P1 - Q1) is large, the number of second inner ribs connected to both the specific first inner rib and the first vertex-side portion of the second frame rib becomes relatively small, whereby the strength between the specific first inner rib and the second frame rib decreases or the electrical resistance increases, which may lead to a decrease in the strength of the lead-acid battery grid or a decrease in the uniformity of electrical resistance. In contrast, in the present lead-acid battery grid, (P1 - Q1) inner ribs among the P1 second inner ribs are located in at least one of a position between the first frame rib and one of the Q1 second inner ribs adjacent to each other and a position between the two adjacent second inner ribs among the Q1 second inner ribs. Therefore, for example, as compared to a case where less than (P1 - Q1) inner ribs among the P1 second inner ribs are located between the first frame rib and one of the Q1 second inner ribs adjacent to each other, the continuous space with a large width in the second direction can be ensured without increasing the number (P1 - Q1). Thereby, the absolute value of the difference between the pressing force to the first frame rib and the pressing force to the second frame rib becomes still larger while the decrease in the strength of the lead-acid battery grid and the like is prevented, so that the deformation of the first vertex can be prevented more effectively.

(5) The above lead-acid battery grid may be configured such that the frame further includes a third frame rib with a third length F3 that faces the first frame rib and is connected with the second frame rib at a second vertex. The inner part further includes a plurality of third inner ribs extending toward the third frame rib. The number of the third inner ribs is L2 (L2 is an integer of 2 or more), the third inner ribs extending toward a second vertex-side portion of the third frame rib among the third frame ribs, that is a portion from a position of the second vertex to a position separated by a second reference length being shorter than both a half of the length F2 and a half of the length F3, the third inner ribs extending over at least three of the second inner ribs. The number of the third inner ribs is M2 (M2 is an integer of 1 or more), the third inner ribs being located between a specific fourth inner rib that is closest to the third frame rib among the at least three of the second inner ribs and the second vertex-side portion of the third frame rib, and connected to both the specific fourth inner rib and the second vertex-side portion of the third frame rib. The number of the second inner ribs is P2 (P2 is an integer of 2 or more), the second inner ribs extending toward a second vertex-side portion of the second frame rib among the second frame ribs, that is a portion from a position of the second vertex to a position separated by the second reference length, and extending over at least three of the third inner ribs. The number of the second inner ribs is Q2 (Q2 is an integer of 1 or more and less than P2), the second inner ribs being located between a specific third inner rib that is closest to the second frame rib among the at least three of the third inner ribs and the second vertex-side portion of the second frame rib, and being connected to both the specific third inner rib and the second vertex-side portion of the second frame rib. A relational expression represented in (2) below holds:

$$(M2/L2) > (Q2/P2) \quad (2)$$

According to the present lead-acid battery grid, not only the deformation of the first vertex but also the deformation of the second vertex can be prevented.

The above lead-acid battery grid may be configured such that for example, a relational expression shown in (K2) below holds for L2, M2, P2, and Q2 above:

$$L2 \geq P2 \text{ and } M2 \geq Q2, \text{ or } L2 \leq P2 \text{ and } M2 \leq Q2 \text{ (K2)}$$

This relational expression (K2) indicates that the magnitude relationship of the number of third inner ribs and the number of second inner ribs is the same between the inside and the outside of the specific third inner ribs and the specific fourth inner ribs. When the relational expression shown in (K2) above holds, it is possible to prevent the decrease in the strength and the increase in the electrical resistance of the lead-acid battery grid as compared to a configuration in which the relational expression shown in (K2) does not hold.

(6) The above lead-acid battery grid may be configured such that the frame further includes a fourth frame rib facing the second frame rib and connected with the third frame rib at a third vertex, the above lead-acid battery grid further includes a current collector formed between a center in the second direction and the third vertex in the fourth frame rib, and a relational expression represented in (3) below holds:

$$(Q2/P2) > (Q1/P1) \quad (3)$$

The smaller the transmission ratio (Q2/P2, Q1/P1) of the force toward the second frame rib, the wider the non-conductive region in which no inner rib exits between the specific first inner rib and the second frame rib, or between the specific third inner rib and the second inner rib, and no current path is formed. The closer the non-conductive region is to the current collector, the larger the electrical resistance of the entire lead-acid battery grid becomes. In contrast, in the present lead-acid battery grid, the distance between the current collector and the second vertex is shorter than the distance between the current collector and the first vertex. The transmission ratio (Q2/P2) of the force toward the second frame rib on the second vertex side close to the current collector is larger than the transmission ratio (Q1/P1) of the force toward the second frame rib on the first vertex side far from the current collector, and hence the non-conductive region becomes narrow in the vicinity of the second vertex close to the current collector. As a result, according to the present lead-acid battery grid, the non-conductive region is narrower as closer to the current collector in the vicinity of the vertex of the current collector, and as compared to a configuration in which the transmission ratio (Q2/P2) of the force toward the second frame rib on the second vertex side close to the current collector is smaller than the transmission ratio (Q1/P1) of the force toward the second frame rib on the first vertex side far from the current collector, it is possible to prevent the deformation of the vertex while preventing the increase in the electrical resistance of the entire lead-acid battery grid.

(7) The above lead-acid battery grid may be configured such that the frame further includes a fourth frame rib facing the second frame rib and extending in the second direction, and the lead-acid battery grid further includes a current collector formed on one of the second frame rib and the fourth frame rib. Normally, in the lead-acid battery grid, the active material is applied along the direction in which the frame rib with the current collector formed thereon extends. According to the present lead-acid battery grid, the continuous space extends in the second direction in which the active material is applied. When the direction in which the active material is applied coincides with the direction in which the continuous space extends, the active material is sequentially applied along the direction in which the continuous space extends at the time of application of the active material, so that the active material is more reliably applied to the continuous space. For this reason, as compared to a case where the portion where no inner rib exists extends in a direction intersecting the direction in which the active material is applied, the active material can be more reliably applied to the continuous space to prevent the active material from falling off.

The above lead-acid battery grid may be configured such that the frame further includes a fourth frame rib facing the second frame rib and extending in the second direction, and the lead-acid battery grid further includes a current collector formed on the fourth frame rib. Since no second inner rib exits in the continuous space, the continuous space constitutes no current path. For this reason, the closer the continuous space is to the current collector, the larger the electrical resistance of the entire lead-acid battery grid. In contrast, in the present lead-acid battery grid, the continuous space is formed facing the second frame rib. Thus, as compared to a case where the continuous space is formed facing the fourth frame rib, the continuous space not constituting the current path is far from the current collector, and it is possible to prevent the increase in the electrical resistance of the entire storage battery grid.

(8) The above lead-acid battery grid may be configured such that the plurality of first inner ribs are substantially parallel to each other, and the plurality of second inner ribs are substantially parallel to each other. When the plurality of first inner ribs are substantially parallel to each other and the plurality of second inner ribs are substantially parallel to each other as in the present lead-acid battery grid, the directions of the pressing force from the respective first inner ribs to the first frame rib become substantially equal, and the directions of the pressing force from the respective second inner ribs to the second frame rib become substantially equal, and hence the pressing force to the first frame rib and the pressing force to the second frame rib becomes relatively large. In the configuration where the pressing force to the first frame rib and the pressing force to the second frame rib becomes relatively large as thus described, the degree of deformation of the vertex tends to become large, and hence the present invention is particularly effective.

The above lead-acid battery grid may be configured such that at least one of a first condition, in which the plurality of first inner ribs and the first frame ribs are substantially orthogonal to each other, and a second condition, in which the plurality of second inner ribs and the second frame ribs are substantially orthogonal to each other, holds. Like the above lead-acid battery grid, when the plurality of first inner ribs and the first frame ribs are substantially orthogonal to each other and the plurality of second inner ribs and the second frame ribs are substantially orthogonal to each other, a component of the pressing force to the first frame rib, the component facing the direction orthogonal to the first frame rib, becomes large and a component of the pressing force to the second frame rib, the component facing the direction orthogonal to the second frame rib, becomes large. Therefore, the pressing force to the first frame rib and the pressing force to the second frame rib become relatively large. In the configuration where the pressing force to the first frame rib and the pressing force to the second frame rib becomes relatively large as thus described, the degree of deformation of the vertex tends to become large, and hence the present invention is particularly effective.

(9) A lead-acid battery disclosed in the present specification includes: a positive electrode plate; a negative electrode plate; and a separator disposed between the positive electrode plate and the negative electrode plate. The lead-acid battery may be configured such that at least one of the positive electrode plate and the negative electrode plate includes the above lead-acid battery grid, and an active material applied to the lead-acid battery grid. According to the present lead-acid battery grid, the peeling of the active material caused by the deformation of the vertex of the lead-acid battery grid can be prevented.

A. Embodiment:

A-1. Configuration:

(Configuration of lead-acid battery 100)

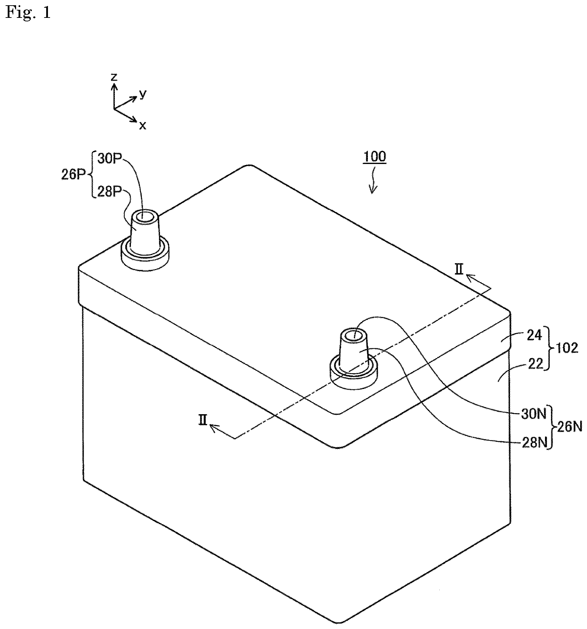

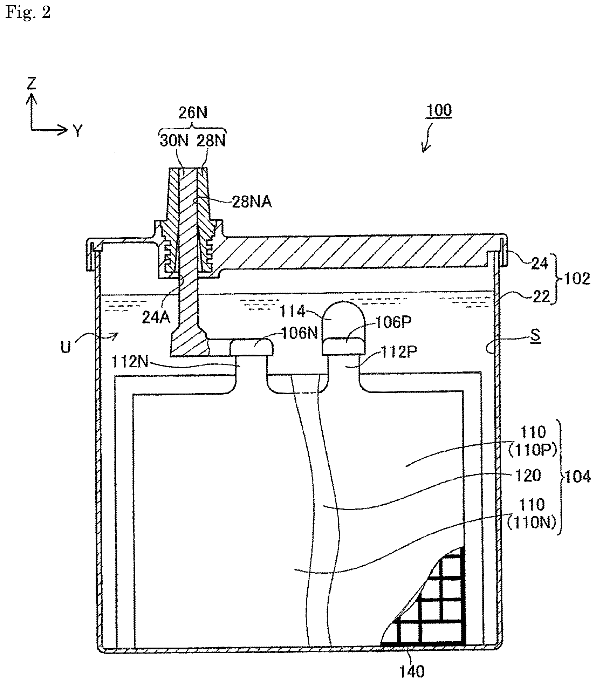

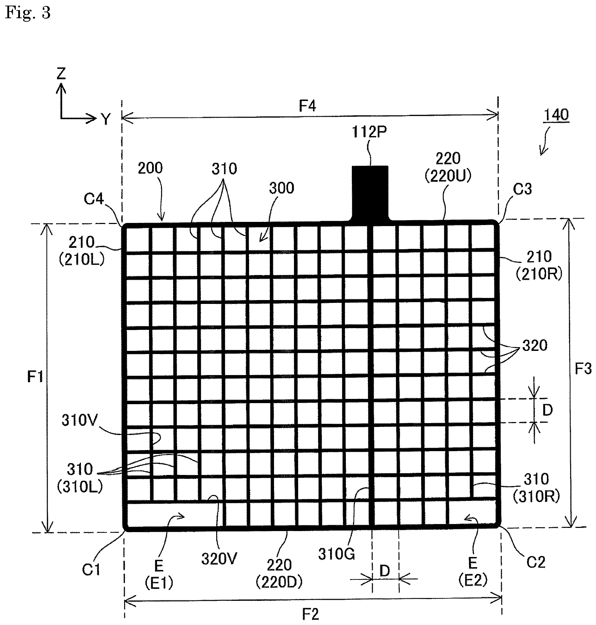

Fig. 1 is a perspective view showing an external configuration of the lead-acid battery 100 in the present embodiment, and Fig. 2 is an explanatory view showing a YZ cross-sectional configuration of the lead-acid battery 100 at a position II-II in Fig. 1 In Fig. 2, a positive electrode plate 110P, a negative electrode plate 110N, and a separator 120, which will be described later, are expressed in a form different from the actual state so as to be visually viewed for convenience. Each figure shows XYZ axes orthogonal to each other for specifying the direction. In the present specification, for convenience, the Z-axis direction will be referred to as a "vertical direction Z," the Z-axis positive direction will be referred to as an "upward direction," and the Z-axis negative direction will be referred to as a "downward direction." However, the lead-acid battery 100 may actually be installed in an orientation different from those described above. The X-axis direction will be referred to as a "plate stacking direction X," and the Y-axis direction will be referred to as a "strap array direction Y." Hereinafter, when a positive electrode side component and a negative electrode side component are to be distinguished, "P" is added to the end of the reference numeral for the positive electrode side component, and "N" is added to the end of the reference numeral for the negative electrode side component. The same applies to Fig. 3 and the subsequent figures.

As shown in Figs. 1 and 2, the lead-acid battery 100 includes a battery casing 102, an element 104, a positive electrode strap 106P, and a negative electrode strap 106N.

(Configuration of battery casing 102)

The battery casing 102 includes a container 22 and a lid 24. The container 22 is a substantially rectangular parallelepiped case having an opening on the upper surface and is formed of a synthetic resin, for example. An accommodation space S inside the battery casing 102 is partitioned into a plurality of cell chambers arranged in the plate stacking direction X by a partition wall (not shown). Each cell chamber includes the element 104, the positive electrode strap 106P, and the negative electrode strap 106N and is filled with an electrolytic solution U. The electrolytic solution U contains, for example, dilute sulfuric acid as a main component.

The lid 24 is a substantially rectangular lid-like member corresponding to an opening of the container 22 and is formed of a synthetic resin, for example. The lid 24 is disposed so as to close the opening of the container 22, and the accommodation space S of the battery casing 102 is in a closed state by, for example, thermal welding of the peripheral portion of the lower surface of the lid 24 and the peripheral portion of the opening of the container 22.

The lid 24 includes a positive electrode terminal part 26P and a negative electrode terminal part 26N. The positive electrode terminal part 26P and the negative electrode terminal part 26N have substantially the same configuration, and hence the configuration will be described below taking the negative electrode terminal part 26N as an example. The negative electrode terminal part 26N includes a bushing 28N and a pole 30N. The bushing 28N is a substantially cylindrical conductive member in which a vertically penetrating through-hole 28NA is formed, and the busing 28N is formed of a metal such as a lead alloy. The lower portion of the bushing 28N is embedded in the lid 24 by insert molding, and the upper portion of the bushing 28N protrudes upward from the upper surface of the lid 24. A communication hole 24A communicating with the through-hole 28NA of the bushing 28N is formed through the lower portion of the bushing 28N in the lid 24. The pole 30N is a substantially cylindrical conductive member and is formed of a metal such as a lead alloy, for example. The pole 30N is inserted into the through-hole 28NA of the bushing 28N and the communication hole 24A of the lid 24. The upper end of the pole 30N is disposed at substantially the same position as the upper end of the bushing 28N, and the lower end of the pole 30N protrudes downward from the lower end of the bushing 28N and protrudes further downward from the lower surface of the lid 24. The upper end of the pole 30N is joined to the bushing 28N by welding. Note that the upper end of the bushing 28N in the negative electrode terminal part 26N functions as an external connection terminal on the negative electrode side connected to a load or the like (not shown), and the upper end of a bushing 28P in the positive electrode terminal part 26P functions as an external connection terminal on the positive electrode side connected to the load or the like.

(Configuration of element 104)

The element 104 includes a plurality of flat plate-like positive electrode plates 110P, a plurality of flat plate-like negative electrode plates 110N, and a sheet-like separator 120 disposed between the positive electrode plate 110P and the negative electrode plate 110N. Hereinafter, the positive electrode plate 110P and the negative electrode plate 110N are also referred to collectively as a "plate 110."

In the plurality of positive electrode plates 110P and the plurality of negative electrode plates 110N, the positive electrode plates 110P and the negative electrode plates 110N are alternately arranged in the plate stacking direction X one by one. Each plate 110 has a substantially rectangular flat plate shape and is arranged so as to be substantially orthogonal to the plate stacking direction X.

The positive electrode plate 110P is a paste-type plate prepared by filling a plate-like grid 140 with a positive active material (e.g., lead dioxide) and is formed in a substantially rectangular shape. On one side in the strap array direction Y (Y-axis positive side) at the upper end of the positive electrode plate 110P, a positive-side lug part 112P is provided so as to protrude upward. The negative electrode plate 110N is a paste-type plate prepared by filling the plate-like grid 140 with a negative active material (e.g., spongy lead) and is formed in a substantially rectangular shape like the positive electrode plate 110P. On the other side in the strap array direction Y (Y-axis negative side) at the upper end of the negative electrode plate 110N, a negative-side lug part 112N is provided so as to protrude upward. The positive-side lug part 112P and the negative-side lug part 112N are arranged so as to be located on the opposite sides of the center of the element 104 from each other in the strap array direction Y. The detailed configuration of the grid 140 will be described later. The grid 140 corresponds to the lead-acid battery grid in the claims.

The separator 120 is made of an insulating material (e.g., glass fiber or synthetic resin). The separator 120 is disposed in each cell chamber so as to isolate a region where each positive electrode plate 110P is disposed from a region where each negative electrode plate 110N is disposed. The separator 120 may be formed in a bag shape and accommodate either the positive electrode plate 110P or the negative electrode plate 110N.

(Configuration of positive electrode strap 106P and negative electrode strap 106N)

The positive electrode strap 106P is a flat conductive member. The positive electrode strap 106P is located above the plurality of positive-side lug parts 112P in each cell chamber and is disposed so as to be substantially orthogonal to the plurality of positive-side lug parts 112P in the vertical direction. The lower surface of the positive electrode strap 106P is joined to the plurality of positive-side lug parts 112P. The negative electrode strap 106N is a flat conductive member. The negative electrode strap 106N is located above the plurality of negative-side lug parts 112N in each cell chamber and is disposed so as to be substantially orthogonal to the plurality of negative-side lug parts 112N in the vertical direction. The lower surface of the negative electrode strap 106N is joined to the plurality of negative-side lug parts 112N. The positive electrode strap 106P and the negative electrode strap 106N having different polarities are connected via the connecting member 114 between the cell chambers, whereby the plurality of elements 104 are electrically connected in series. The positive electrode strap 106P accommodated in the cell chamber located at one end in the plate stacking direction X (X-axis negative side) among the plurality of cell chambers is joined to the lower end of a pole 30P of the positive electrode terminal part 26P. The negative electrode strap 106N accommodated in the cell chamber located at the other end in the plate stacking direction X (X-axis positive side) among the plurality of cell chambers is joined to the lower end of a pole 30N of the negative electrode terminal part 26N.

A-2. Detailed configuration of grid 140:

(Basic configuration of grid 140)

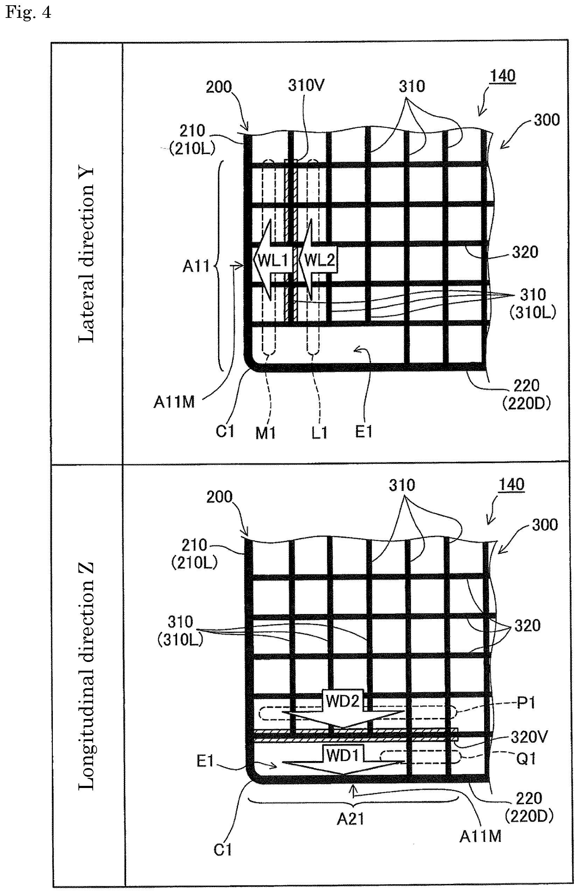

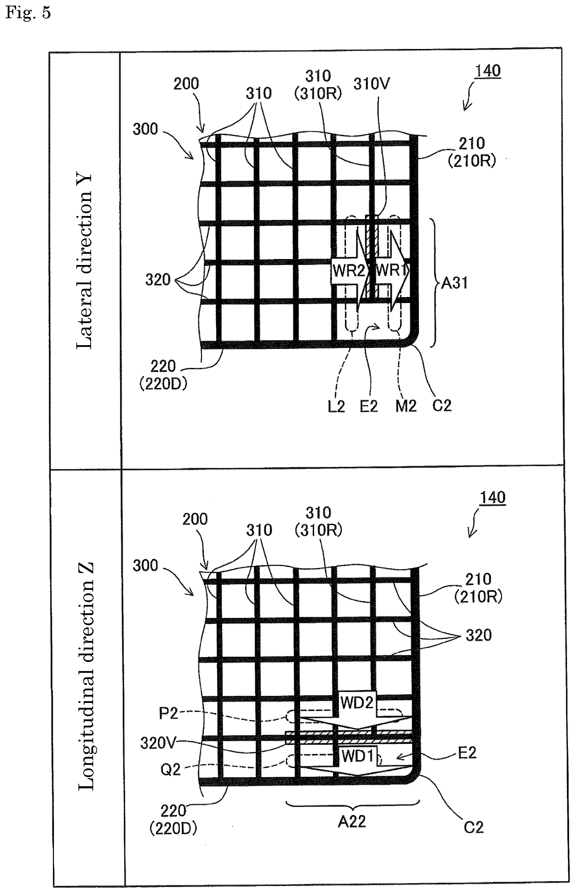

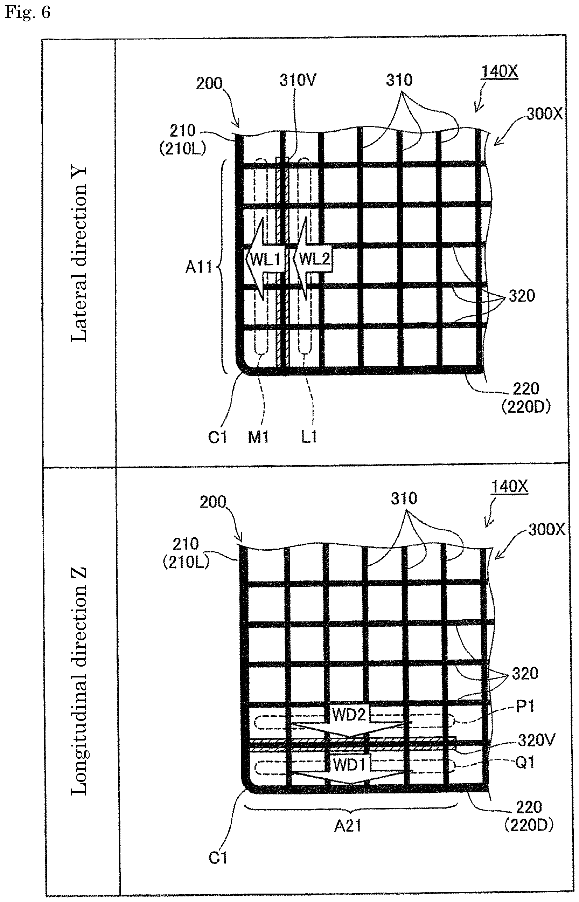

Fig. 3 is an explanatory view showing the YZ plane configuration of the grid 140. Fig. 4 is an explanatory view showing, in an enlarged form, a YZ plane configuration of a portion in the vicinity of a first vertex C1 of the grid 140. Fig. 5 is an explanatory view showing, in an enlarged manner, a YZ plane configuration of a portion in the vicinity of a second vertex C2 in the grid 140. In the following description, the Z-axis direction is also referred to as a "longitudinal direction Z," and the Y-axis direction is also referred to as a "lateral direction Y" The upper part of Fig. 4 and the upper part of Fig. 5 show an action state of a force in the lateral direction Y, and the lower part of Fig. 4 and the lower part of Fig. 5 show an action state of a force in the longitudinal direction Z. The same applies to Fig. 6 described later. The longitudinal direction Z corresponds to the first direction in the claims, and the lateral direction Y corresponds to the second direction in the claims.
As shown in Fig. 3, the grid 140 includes a frame 200 that is a quadrangular frame body, and an inner part 300 that is disposed on the inner peripheral side of the frame 200. The grid 140 is made of, for example, lead or a lead alloy (such as a lead-calcium alloy).
The frame 200 includes a pair of longitudinal frame ribs 210 substantially parallel to the longitudinal direction Z, and a pair of lateral frame ribs 220 substantially parallel to the lateral direction Y. Hereinafter, of the pair of longitudinal frame ribs 210, the longitudinal frame rib 210 located on the Y-axis negative side in Fig. 3 will be referred to as a "left longitudinal frame rib 210L," and the longitudinal frame rib 210 located on the Y-axis positive side will be referred to as a "right longitudinal frame rib 210R." Of the pair of lateral frame ribs 220, the lateral frame rib 220 located on the upper side (Z-axis positive side) will be referred to as the "upper lateral frame rib 220U," and the lateral frame rib 220 located on the lower side (Z-axis negative side) will be referred to as the "lower lateral frame rib 220D." A vertex shared by the left longitudinal frame rib 210L and the lower lateral frame rib 220D will be referred to as a "first vertex C1," a vertex shared by the lower lateral frame rib 220D and the right longitudinal frame rib 210R will be referred to as a "second vertex C2," a vertex shared by the right longitudinal frame rib 210R and the upper lateral frame rib 220U will be referred to as a "third vertex C3," and a vertex shared by the upper lateral frame rib 220U and the left longitudinal frame rib 210L will be referred to as a "fourth vertex C4." These four vertices C1 to C4 are also collectively referred to as a "vertex C."
The length of the left longitudinal frame rib 210L in the longitudinal direction Z is F1, and the length of the right longitudinal frame rib 210R in the longitudinal direction Z is F3. In the present embodiment, F1 = F3 is assumed. Further, the length of the lower lateral frame rib 220D in the lateral direction Y is F2, and the length of the upper lateral frame rib 220U in the lateral direction Y is F4. In the present embodiment, F2 = F4 is assumed. Note that the left longitudinal frame rib 210L corresponds to the first frame rib in the claims, the lower lateral frame rib 220D corresponds to the second frame rib in the claims, the right longitudinal frame rib 210R corresponds to the third frame rib in the claims, and the upper lateral frame rib 220U corresponds to the fourth frame rib in the claims.
Further, in the present embodiment, on the upper lateral frame rib 220U, the positive-side lug part 112P described above is electrically connected to the grid 140 by being joined to a position on the right side of the center of the upper lateral frame rib 220U in the lateral direction Y. Further, the positive-side lug part 112P corresponds to the current collector in the claims.
The inner part 300 includes a plurality of (fourteen in the present embodiment) longitudinal inner ribs 310 substantially parallel to the longitudinal direction Z and a plurality of (eleven in the present embodiment) lateral inner ribs 320 substantially parallel to the lateral direction Y. The inner part 300 is formed in a stitched shape so that the plurality of longitudinal inner ribs 310 and the plurality of lateral inner ribs 320 are substantially orthogonal to each other, and at each intersection, the longitudinal inner rib 310 and the lateral inner rib 320 are electrically connected by being joined to each other. Each longitudinal inner rib 310 is a linear body extending linearly, is substantially parallel to the pair of longitudinal frame ribs 210, and is substantially orthogonal to at least one of the pair of lateral frame ribs 220. The plurality of longitudinal inner ribs 310 are arranged at different positions in the lateral direction Y. In the present embodiment, the plurality of longitudinal inner ribs 310 are arranged at substantially equal intervals (array intervals D) in the lateral direction Y. In the present embodiment, an area of a cross-section of a basic longitudinal inner rib 310G, the cross-section being orthogonal to the axial direction of the basic longitudinal inner rib 310G which is one longitudinal inner rib 310 extending downward from the positive-side lug part 112P among the plurality of longitudinal inner ribs 310, is larger over the entire length of the longitudinal inner rib 310 than an area of a cross-section of each of the other longitudinal inner ribs 310, the cross-section being orthogonal to the axial direction thereof. As a result, the basic longitudinal inner rib 310G has a high current collection capability since having lower electrical resistance, as compared to the other longitudinal inner ribs 310. In the present specification, being substantially parallel means that an angle T ($0° \leq T \leq 90°$) formed by two ribs (frame rib or inner rib) is 5 degrees or less, and being substantially orthogonal means that an angle X ($0° \leq X \leq 90°$) formed by two ribs (frame rib or inner rib) is 85 degrees or more.

Each lateral inner rib 320 is a linear body extending linearly, is substantially parallel to the pair of lateral frame ribs 220, and is substantially orthogonal to at least one of the pair of longitudinal frame ribs 210. The plurality of lateral inner ribs 320 are arranged at different positions in the longitudinal direction Z. In the present embodiment, the plurality of lateral inner ribs 320 are arranged at substantially equal intervals (array intervals D) in the longitudinal direction Z, that is, at the same array interval D as the plurality of longitudinal inner ribs 310. In the present embodiment, the area of the cross-section of the lateral inner rib 320 orthogonal to the axial direction is substantially the same as the area of the cross-section of the longitudinal inner rib 310 except for the basic longitudinal inner rib 310G, the cross-section being orthogonal to the axial direction. Note that the lateral inner rib 320 corresponds to the first inner rib and the third inner rib in the claims, and the longitudinal inner rib 310 corresponds to the second inner rib in the claims.

(About continuous space E)

As shown in Figs. 3 to 5, a continuous space E exists in the inner part 300 of the grid 140. The continuous space E is a space located in the vicinity of one vertex C and is a space continuously connected with a width larger than the array interval D between the adjacent longitudinal inner ribs 310 due to no connection of the end on the vertex C side of one or more longitudinal inner ribs 310 to the lateral frame rib 220 sharing the vertex C. The continuous space E extends along the direction in which the upper lateral frame rib 220U with the positive-side lug part 112P formed thereon extends. In the present embodiment, a first continuous space E1 exists in the vicinity of the first vertex C1 of the grid 140, and a second continuous space E2 exists in the vicinity of the second vertex C2.

Specifically, as shown in Fig. 3 and Fig. 4, among the plurality of longitudinal inner ribs 310, the basic longitudinal inner rib 310G, six longitudinal inner rib 310 on the left of the basic longitudinal inner rib 310G, and three longitudinal inner ribs 310 on the right of the basic longitudinal inner rib 310G continuously extend from the upper lateral frame rib 220U to the lower lateral frame rib 220D. On the other hand, three longitudinal inner ribs 310 from the left longitudinal frame rib 210L continuously extend from the upper lateral frame rib 220U to the first lateral inner rib 320 from the bottom (hereinafter referred to as "specific lateral inner rib 320V"), but are not connected to the lower lateral frame rib 220D. In other words, in each of the three longitudinal inner ribs 310, a portion between the specific lateral inner rib 320V and the lower lateral frame rib 220D is absent. The space formed by the absence is the first continuous space E1. Hereinafter, the three longitudinal inner ribs 310 with the absent portions are also referred to as "left partially absent longitudinal inner ribs 310L."

Further, as shown in Figs. 3 and 5, one longitudinal inner rib 310 from the right longitudinal frame rib 210R continuously extends from the upper lateral frame rib 220U to the specific lateral inner rib 320V, but is not connected to the lower lateral frame rib 220D. In other words, in the one longitudinal inner rib 310, a portion between the specific lateral inner rib 320V and the lower lateral frame rib 220D is absent. A region formed by the absence is the second continuous space E2. Hereinafter, the one partially absent longitudinal inner rib 310 is also referred to as a "right partially absent longitudinal inner rib 310R." Note that the specific lateral inner rib 320V corresponds to the specific first inner rib and the specific third inner rib in the claims. As will be described later, in the grid 140 of the present embodiment, the occurrence of deformation of the first vertex C1 can be prevented due to the existence of the first continuous space E1, and the deformation of the second vertex C2 can be prevented due to the existence of the second continuous space E2.

A-3. About deformation of vertex C:

(Occurrence factor of deformation of vertex C)

Fig. 6 is an explanatory view showing, in an enlarged manner, a YZ plane configuration of a portion in the vicinity of the first vertex C1 in a grid 140X of a comparative example. An inner part 300X of the grid 140X of the comparative example is different from the grid 140 of the present embodiment in that all the longitudinal inner ribs 310 are continuously connected from the upper lateral frame rib 220U to the lower lateral frame rib 220D, and there is no continuous space E.

For example, when the lead-acid battery is used for a long period of time, a phenomenon (hereinafter referred to as "growth") occurs in which the inner rib of the grid extends in the axial direction due to corrosion (e.g., oxidative corrosion) of the inner rib. In the grid 140 of the present embodiment and the grid 140X of the comparative example (hereinafter also referred to as "grid 140 or the like"), when the growth of the inner rib occurs, a force to press the longitudinal frame rib 210 connected to the lateral inner rib 320 toward the outer peripheral side of the frame 200 is generated in the lateral direction Y due to the growth of the lateral inner rib 320. Further, a force to press the lateral frame rib 220 connected to the longitudinal inner rib 310 toward the outer peripheral side of the frame 200 is generated in the longitudinal direction Z due to the growth of the longitudinal inner rib 310. Then, by the pressing force to the longitudinal frame rib 210 due to the growth of the lateral inner rib 320 and the pressing force to the lateral frame rib 220 due to the growth of the longitudinal inner rib 310, a phenomenon may occur in which the vicinity of the vertex C of the frame 200 is deformed to the side in the plate stacking direction X (hereinafter referred to as "deformation of the vertex").

As a factor of the deformation of the vertex C, for example, the following can be considered. That is, it is difficult to form the grid 140 or the like in a complete plane, and there is distortion in the frame 200, or distortion in the inner rib due to variations in the amount of active material applied to each side of the grid 140. When there is distortion in the grid 140 as thus described, for example, when in the vicinity of the first vertex C1, the left longitudinal frame rib 210L receives a pressing force due to the growth of the lateral inner rib 320 and the lower lateral frame rib 220D receives a pressing force due to the growth of the longitudinal inner rib 310, it is considered that the first vertex C1 is deformed by the action of a force to displace the first vertex C1 to the side in the plate stacking direction X. When the deformation of the first vertex C1 occurs, the active material applied to the periphery of the deformed first vertex C1 easily peels off, and when the active material peels off, for example, the corrosion of the grid 140 progresses at a location where the inner rib is exposed, and there is a possibility that the strength of the grid 140 decreases significantly.

(Conditions for reducing deformation of vertex C)

The condition for preventing the deformation of the first vertex C1 is that the relational expression shown in (1) below holds for the following L1, M1, P1, and Q1 in the grid 140 or the like:

$$(M1/L1) > (Q1/P1) \quad (1)$$

As described above, the deformation of the first vertex C1 tends to appear more significantly, with a smaller absolute value of the difference between a pressing force to the left longitudinal frame rib 210L due to the growth of the lateral inner rib 320 (hereinafter simply referred to as "a pressing force WL1 to the left longitudinal frame rib 210L") and a pressing force to the lower lateral frame rib 220D due to the growth of the longitudinal inner rib 310 (hereinafter simply referred to as "a pressing force WD1 to the lower lateral frame rib 220D") in the vicinity of the first vertex C1.

Here, each of L1, M1, P1, and Q1 means the following. A first vertex-side portion A11 of the left longitudinal frame rib 210L to be described later (cf. the upper part of Fig. 4 and the upper part of Fig. 6) is a portion in the left longitudinal frame rib 210L from the position of the first vertex C1 to a position separated therefrom by a first reference length. Here, the first reference length is a length smaller than both a half of the length F1 of the left longitudinal frame rib 210L and a half of the length F2 of the lower lateral frame rib 220D. In the present embodiment, the first reference length is 1/10 or more of the shorter one of the length F1 of the left longitudinal frame rib 210L and the length F2 of the lower lateral frame rib 220D, and is 2/5 or less of the shorter one. Further, a first vertex-side portion A21 of the lower lateral frame rib 220D (cf. the lower part of Fig. 4 and the lower part of Fig. 6) is a portion in the lower lateral frame rib 220D from the position of the first vertex C1 to a portion separated therefrom by the first reference length.

L1 (L1 is an integer of 2 or more): As shown in the upper part of Fig. 4 and the upper part of Fig. 6, the number of lateral inner ribs 320 that extend toward the first vertex-side portion A11 of the left longitudinal frame rib 210L and extend over at least three longitudinal inner ribs 310.

The number L1 of lateral inner ribs 320 means the number of lateral inner ribs 320 that apply, to a left specific longitudinal inner rib 310V, a force toward the first vertex-side portion A11 of the left longitudinal frame rib 210L (hereinafter simply referred to as "a pressing force WL2 to the left specific longitudinal inner rib 310V) due to the growth of the lateral inner rib 320. The left specific longitudinal inner rib 310V is the longitudinal inner rib 310 closest to the left longitudinal frame rib 210L among the at least three longitudinal inner ribs 310 (the longitudinal inner ribs 310 in contact with all the L1 lateral inner ribs 320) and corresponds to the specific second inner rib in the claims. Note that "toward the first vertex-side portion A11" refers to that a straight line extending from the left end of the lateral inner rib 320 along the axial direction of the lateral inner rib 320 intersects the first vertex-side portion A11. "A force toward the first vertex portion A11" refers to a force by which a straight line extending along the vector direction of the force from the left specific longitudinal inner rib 310V intersects the first vertex-side portion A11 among forces applied to the left specific longitudinal inner rib 310V.

M1 (M1 is an integer of 1 or more): As shown in the upper part of Fig. 4 and the upper part of Fig. 6, the number of lateral inner ribs 320 located between the left specific longitudinal inner ribs 310V and the first vertex-side portion A11 and connected to both the left specific longitudinal inner rib 310V and the first vertex-side portion A11.

The number M1 of lateral inner ribs 320 means the number of lateral inner ribs 320 that transmit the pressing force WL2 to the left specific longitudinal inner rib 310V from the left specific longitudinal inner rib 310V to the left longitudinal frame rib 210L. As shown in the upper part of Fig. 4, in a view along the lateral direction Y, at least some of the M1 lateral inner ribs 320 are located lower than a center A11M of the first vertex-side portion A11 of the left longitudinal frame rib 210L, that is, on the lower lateral frame rib 220D side.

P1 (P1 is an integer of 2 or more): As shown in the lower part of Fig. 4 and the lower part of Fig. 6, the number of longitudinal inner ribs 310 that extend toward the first vertex-side portion A21 of the lower lateral frame rib 220D and extend over at least three lateral inner ribs 320.

The number P1 of longitudinal inner ribs 310 means the number of longitudinal inner ribs 310 that apply, to the lower specific lateral inner rib 320V, a force toward the first vertex-side portion A21 of the lower lateral frame rib 220D (hereinafter simply referred to as "a pressing force WD2 to the lower specific lateral inner rib 320V) due to the growth of the longitudinal inner rib 310. The lower specific lateral inner rib 320V is the lateral inner rib 320 closest to the lower lateral frame rib 220D among the at least three lateral inner rib 320 (the lateral inner rib 320 in contact with all the P1 longitudinal inner ribs 310) and corresponds to the specific first inner rib in the claims. Note that "toward the first vertex-side portion A21" refers to that a straight line extending from the lower end of the longitudinal inner rib 310 along the axial direction of the longitudinal inner rib 310 intersects the first vertex-side portion A21. "A force toward the first vertex-side portion A21" refers to a force by which a straight line extending along the vector direction of the force from the lower specific lateral inner rib 320V intersects the first vertex-side portion A21 among forces applied to the lower specific lateral inner rib 320V.

Q1 (Q1 is an integer of 1 or more and less than P1): As shown in the lower part of Fig. 4 and the lower part of Fig. 6, the number of longitudinal inner ribs 310 located between the lower specific lateral inner rib 320V and the first vertex-side portion A21 and connected to both the lower specific lateral inner rib 320V and the first vertex-side portion A21.

The number Q1 of longitudinal inner ribs 310 means the number of longitudinal inner ribs 310 that transmit the pressing force WD2 to the lower specific lateral inner rib 320V from the lower specific lateral inner rib 320V to the lower lateral frame rib 220D. As shown in the lower part of Fig. 4, in a view along the longitudinal direction Z, all the Q1 longitudinal inner ribs 310 are located on the right side of a center A21M of the first vertex-side portion A21 of the lower lateral frame rib 220D, that is, on the opposite side to the left longitudinal frame rib 210L. Three longitudinal inner ribs 310 of the P1 longitudinal inner ribs 310 are located between the left longitudinal frame rib 210L and the longitudinal inner rib 310 located on the leftmost side among the Q1 longitudinal inner ribs 310, that is, the longitudinal inner rib 310 closest to the left longitudinal frame rib 210L in the lateral direction Y.

Each of (M1/L1) and (Q1/P1) shall mean the following.

(M1/L1): The ratio of the force transmitted to the left longitudinal frame rib 210L (the pressing force WL1 to the left longitudinal frame rib 210L) with respect to the pressing force WL2 to the left specific longitudinal inner rib 310V (hereinafter referred to as "the transmission ratio of the force toward the left longitudinal frame rib 210L") (cf. the upper part of Fig. 4 and the upper part of Fig. 6).

(Q1/P1): The ratio of the force transmitted to the lower lateral frame rib 220D (the pressing force WD1 to the lower lateral frame rib 220D) with respect to the pressing force WD2 to the lower specific lateral inner rib 320V (hereinafter referred to as "the transmission ratio of the force toward the lower lateral rib 220D").

Of the pressing force WL2 applied to the left specific longitudinal inner rib 310V, a force not transmitted to the left longitudinal frame rib 210L is absorbed by the left specific longitudinal inner rib 310V being bent. Of the pressing force WD2 applied to the lower specific lateral inner rib 320V, a force not transmitted to the lower lateral frame rib 220D is absorbed by the lower specific lateral inner rib 320V being bent. The M1 lateral inner ribs 320 between the left specific longitudinal inner rib 310V and the first vertex-side portion A11 are short in the lateral direction Y as compared to the L1 lateral inner ribs 320. Further, the longer the lateral inner rib 320 in the lateral direction Y, the larger the pressing force due to the growth of the lateral inner rib 320. Therefore, the pressing force due to the growth of the M1 lateral inner ribs 320 is small as compared to the pressing force due to the growth of the L1 lateral inner ribs 320, and the pressing force due to the growth of the M1 lateral inner ribs 320 has a relatively small effect on the left longitudinal frame rib 210L. Similarly, the Q1 longitudinal inner ribs 310 between the lower specific lateral inner rib 320V and the first vertex-side portion A21 are short in the longitudinal direction Z as compared to the P1 longitudinal inner ribs 310. Further, the longer the longitudinal inner rib 310 in the longitudinal direction Z, the larger the pressing force due to the growth of the longitudinal inner rib 310. Therefore, the pressing force due to the growth of the Q1 longitudinal inner ribs 310 is small as compared to the pressing force due to the growth of the P1 longitudinal inner ribs 310, and the pressing force due to the growth of the Q1 longitudinal inner ribs 310 has a relatively small effect on the lower lateral frame rib 220D. In general, for example, in order to prevent distortion of the lead-acid battery grid, the difference between the pressing force WL2 to the left specific longitudinal inner rib 310V and the pressing force WD2 to the lower specific lateral inner rib 320V is small.

As described above, the above relational expression (1) indicates that in the vicinity of the first vertex C1, the transmission ratio of the force toward the lower lateral frame rib 220D is smaller than the transmission ratio of the force toward the left longitudinal frame rib 210L. Therefore, when the above relational expression (1) is satisfied, the transmission ratio (Q1/P1) of the force toward the lower lateral frame rib 220D is smaller than the transmission ratio (M1/L1) of the force toward the left longitudinal frame rib 210L. Thereby, the absolute value of the difference between the pressing force WL1 to the left longitudinal frame rib 210L and the pressing force WD1 to the lower lateral frame rib 220D becomes large in the vicinity of the first vertex C, so that the deformation of the first vertex C1 can be prevented as compared to the case of (M1/L1) = (Q1/P1), for example.

In the grid 140 of the present embodiment, a relational expression shown in (K1) below holds for the L1, M1, P1, and Q1 above:

$$L1 \geq P1 \text{ and } M1 \geq Q1, \text{ or } L1 \leq P1 \text{ and } M1 \leq Q1 \quad (K1)$$

This relational expression (K1) indicates that the magnitude relationship of the number of lateral inner ribs 320 and the number of longitudinal inner ribs 310 is the same between the inside of the specific lateral inner rib 320V and the specific longitudinal inner rib 310V (hereinafter referred to as "an inner portion of the specific inner ribs) and the outside thereof (hereinafter referred to as "an outer portion of the specific inner ribs) When the magnitude relationship between the number of lateral inner ribs 320 and the number of longitudinal inner ribs 310 is different between the inner portion and the outer portion of the specific inner ribs, and for example, when the number of the lateral inner ribs 320 is smaller than the number of the longitudinal inner ribs 310 in the inner portion of the specific inner ribs and the number of lateral inner ribs 320 is equal to or larger than the number of longitudinal inner ribs 310 in the outer portion of the specific inner ribs (L1 < P1 and M1 ≥ Q1), the difference between (L1 - M1) which is the difference between the number of lateral inner ribs 320 in the inner portion and the outer portion of the specific inner rib and (P1 - Q1) which is the difference between the number of longitudinal inner ribs 310 in the inner portion and the outer portion of the specific inner ribs becomes large, and specifically, (P1 - Q1) becomes relatively larger than (L1 - M1). When (P1 - Q1) becomes large, the ratio (Q1/P1) of the number of longitudinal inner ribs 310 in the outer portion of the specific inner ribs to the number of longitudinal inner ribs 310 in the inner portion of the specific inner rib becomes small. As a result, the strength between the lower specific lateral inner rib 320V and the lower lateral frame rib 220D decreases, or the electrical resistance between the lower specific lateral inner rib 320V and the lower lateral frame rib 220D increases, which may cause a decrease in the strength of the grid 140 or a decrease in the uniformity of electrical resistance. In the grid 140 of the present embodiment, the magnitude relationship between the number of lateral inner ribs 320 and the number of longitudinal inner ribs 310 is the same between the inner portion and the outer portion of the specific inner ribs. Therefore, as compared to a case where the magnitude relationship is different between the inner portion and the outer portion of the specific inner ribs, it is possible to prevent the distortion of the grid 140 or the like which occurs due to the grid 140 or the like being configured so as to satisfy the above relational expression (1), and it is possible to prevent the increase in the electrical resistance.

The condition for preventing the deformation of the second vertex C2 is that a relational expression shown in (2) below holds for L2, M2, P2, and Q2 described below in the grid 140:

$$(M2/L2) > (Q2/P2) \quad (2)$$

In the grid 140 of the present embodiment, a relational expression shown in (K2) below holds for L2, M2, P2, and Q2 above:

$$L2 \geq P2 \text{ and } M2 \geq Q2, \text{ or } L2 \leq P2 \text{ and } M2 \leq Q2 \quad (K2)$$

The condition for preventing the deformation of the second vertex C2 and the relational expression (K2) can be understood in such a manner that, with respect to the condition for preventing the deformation of the first vertex C1 and the relational expression (K1) described above, "L1, M1, P1, Q1" is replaced with "L2, M2, P2, Q2," "the pressing force WL1 to the left longitudinal frame rib 210L" is replaced with "the pressing force WR1 to the right longitudinal frame rib 210R," "the first vertex-side portion A11" is replaced with "the second vertex-side portion A31," "the first vertex-side portion A21" is replaced with "the second vertex-side portion A22," and "the left specific longitudinal inner rib 310V" is replaced with "the right specific inner rib 310V." Therefore, the detailed descriptions thereof will be omitted. Note that the lengths of the first vertex-side portion A11 and the first vertex-side portion A21 correspond to the first reference length in the claims, and the lengths of the second vertex-side portion A31 and the second vertex-side portion A22 correspond to the second reference length in the claims. Here, the second reference length is a length smaller than both a half of the length F2 of the lower lateral frame rib 220D and a half of the length F3 of the right longitudinal frame rib 210R. In the present embodiment, the second reference length is 1/10 or more of the shorter one of the length F2 of the lower lateral frame rib 220D and the length F3 of the right longitudinal frame rib 210R, and is 2/5 or less of the shorter one. The lengths of the first vertex-side portion A11 and the first vertex-side portion A21 and the lengths of the second vertex-side portion A31 and the second vertex-side portion A22 may be the same or different.

A-4. Comparison between grid 140 of present embodiment and grid 140X of comparative example:

As described above, in the grid 140X of the comparative example, in the inner part 300X, all the longitudinal inner ribs 310 are continuously connected from the upper lateral frame rib 220U to the lower lateral frame rib 220D and there is no continuous space E. In the grid 140X of the comparative example, as shown in the upper part of Fig. 6, concerning the lateral direction Y, the number L1 of lateral inner ribs 320 is five, and the number M1 of lateral inner ribs 320 is five. Further, as shown in the lower part of Fig. 6, concerning the longitudinal direction Z, the number P1 of longitudinal inner ribs 310 is five, and the number Q1 of longitudinal inner ribs 310 is five. For this reason, in the grid 140X of the comparative example, (M1/L1) = (Q1/P1) = 1, and the above relational expression (1) is not satisfied. As thus described, when the transmission ratio (M1/L1) of the force toward the left longitudinal frame rib 210L matches the transmission ratio (Q1/P1) of the force toward the lower lateral frame rib 220D, the pressing force WL1 to the left longitudinal frame rib 210L and the pressing force WD1 to the lower lateral frame rib 220D are substantially the same, and the left longitudinal frame rib 210L and the lower lateral frame rib 220D are pressed by substantially equal forces. For this reason, in the grid 140X of the comparative example, the occurrence of deformation of the first vertex C1 cannot be prevented.

In contrast, in the grid 140 of the present embodiment, as described above, the first continuous space E1 exists in the vicinity of the first vertex C1 due to the left partially absent longitudinal inner rib 310L. In the grid 140 of the present embodiment, as shown in the upper part of Fig. 4, concerning the lateral direction Y, the number L1 of lateral inner ribs 320 is five, and the number M1 of lateral inner ribs 320 is five. Further, as shown in the lower part of Fig. 4, concerning the longitudinal direction Z, the number P1 of longitudinal inner ribs 310 is five, and the number Q1 of longitudinal inner ribs 310 is two. Therefore, in the grid 140 of the present embodiment, (M1/L1) > (Q1/P1) holds, and the above relational expression (1) is satisfied. As thus described, when the transmission ratio (M1/L1) of the force toward the left longitudinal frame rib 210L does not match the transmission ratio (Q1/P1) of the force toward the lower lateral frame rib 220D, the pressing force WL1 to the left longitudinal frame rib 210L and the pressing force WD1 to the lower lateral frame rib 220D are different, and the left longitudinal frame rib 210L and the lower lateral frame rib 220D are pressed by different forces. For this reason, in the grid 140 of the present embodiment, the occurrence of deformation of the first vertex C1 can be prevented as compared to the grid 140X of the comparative example.

Further, in the grid 140 of the present embodiment, as described above, the second continuous space E2 exists in the vicinity of the second vertex C2 due to the right partially absent longitudinal inner rib 310R. In the grid 140 of the present embodiment, as shown in the upper part of Fig. 5, concerning the lateral direction Y, the number L2 of lateral inner ribs 320 is three, and the number M2 of lateral inner ribs 320 is three. Further, as shown in the lower part of Fig. 5, concerning the longitudinal direction Z, the number P2 of longitudinal inner ribs 310 is three, and the Q2 of longitudinal inner ribs 310 is two. Therefore, in the grid 140 of the present embodiment, (M2/L2) > (Q2/P2) is satisfied, and the above relational expression (2) is satisfied. As thus described, when the transmission ratio (M2/L2) of the force toward the right longitudinal frame rib 210R does not match the transmission ratio (Q2/P2) of the force toward the lower lateral frame rib 220D, the pressing force WR1 to the right longitudinal frame rib 210R and the pressing force WD1 to the lower lateral frame rib 220D are different, and the right longitudinal frame rib 210R and the lower lateral frame rib 220D are pressed by different forces. For this reason, in the grid 140 of the present embodiment, the occurrence of deformation of the second vertex C2 can be prevented as compared to the grid 140X of the comparative example.

Further, in the grid 140 of the present embodiment, in the view along the lateral direction Y, at least one of the M1 lateral inner ribs 320 is located on the lower lateral frame rib 220D side with respect to the center A11M of the first vertex-side portion A11 of the left longitudinal frame rib 210L. On the other hand, in the view along the longitudinal direction Z, all the Q1 longitudinal inner ribs 310 are located on the opposite side to the left longitudinal frame rib 210L with respect to the center A21M of the first vertex-side portion A21 of the lower lateral frame rib 220D. That is, the first continuous space E1 exists at a position closest to the first vertex C1. Therefore, as compared to the configuration in which the first continuous space E1 exists at a position separated from the first vertex C1, the absolute value of the difference between the pressing force WL1 to the left longitudinal frame rib 210L and the pressing force WD1 to the lower lateral frame rib 220D at the position close to the first vertex C1 becomes large, so that the deformation of the first vertex C1 can be prevented more effectively.

In addition, the larger the width of one continuous space E in the lateral direction Y, the more greatly the specific lateral inner rib 320V constituting the continuous space E is bent, and the pressing force due to the growth of the longitudinal inner rib 310 can thus be effectively absorbed by the specific lateral inner rib 320V, so that the pressing force to the lower lateral frame rib 220D can be reduced more effectively. In the grid 140 of the present embodiment, in the view along the longitudinal direction Z, three longitudinal inner ribs 310 are located between the left longitudinal frame rib 210L and the longitudinal inner rib 310 that is closest to the left longitudinal frame rib 210L among the Q1 longitudinal inner ribs 310. That is, the width of the first continuous space E1 in the lateral direction Y is substantially four times the array interval D between the longitudinal inner ribs 310. Therefore, as compared to a case where the width of the first continuous space E1 in the lateral direction Y is less than three times the array interval D between the longitudinal inner ribs 310, the absolute value of the difference between the pressing force WL1 to the left longitudinal frame rib 210L and the pressing force WD1 to the lower lateral frame rib 220D becomes still larger, and hence the deformation of the first vertex C1 can be prevented more effectively.

Further, in the grid 140 of the present embodiment, in the view along the longitudinal direction Z, (P1 - Q1) (three) longitudinal inner ribs 310 of the P1 longitudinal inner ribs 310 are located between the left longitudinal frame rib 210L and the longitudinal inner rib 310 that is closest to the left longitudinal frame rib 210L among the Q1 longitudinal inner ribs 310. That is, the continuous first continuous space E1 is formed in the first vertex-side portion A21. Here, the larger the number (P1 - Q1), the larger the width of the first continuous space E1 in the lateral direction Y tends to become, and the specific lateral inner rib 320V constituting the first continuous space E1 is bent greatly, thereby enabling the specific lateral inner rib 320V to effectively absorb the pressing force due to the growth of the longitudinal inner rib 310. As a result, it is possible to more effectively reduce the pressing force to the lower lateral frame rib 220D and make large the absolute value of the difference between the pressing force to the left longitudinal frame rib 210L and the pressing force to the lower lateral frame rib 220D. On the other hand, as the number (P1 - Q1) increases, the strength of the grid 140 and the uniformity of electrical resistance may decrease. In contrast, in the grid 140 of the present embodiment, when (P1 - Q1) longitudinal inner ribs 310 of the P1 longitudinal inner ribs 310 are located between the left longitudinal frame rib 210L and the longitudinal inner rib 310 that is closest to the left longitudinal frame rib 210L among the Q1 longitudinal inner ribs 310, as compared to a case where less than (P1 - Q1) longitudinal inner ribs 310 of the P1 longitudinal inner ribs 310 are located, that is, a case where the first continuous space E1 is divided into two or more continuous spaces, one first continuous space E1 with a larger width in the lateral direction Y can be ensured without increasing the number (P1 - Q1). Thereby, the absolute value of the difference between the pressing force WL1 to the left longitudinal frame rib 210L and the pressing force WD1 to the lower lateral frame rib 220D becomes still larger at the first vertex C1 while the decrease in the strength of the grid 140 and the like are prevented, so that the deformation of the first vertex C1 can be prevented more effectively.

Further, in the grid 140 of the present embodiment, as shown in the lower part of Fig. 4 and the lower part of Fig. 5, concerning the longitudinal direction Z, the number P1 of longitudinal inner ribs 310 is five and the number Q1 of longitudinal inner ribs 310 is two, whereas the number P2 of longitudinal inner ribs 310 is three and the number Q2 of longitudinal inner ribs 310 is two, so the following relational expression (3) is satisfied.

$$(Q2/P2) > (Q1/P1) \quad (3)$$

As described above, the above relational expression (3) indicates that the transmission ratio of the force toward the lower lateral frame rib 220D in the vicinity of the second vertex C2 is smaller than the transmission ratio of the force toward the lower lateral frame rib 220D in the vicinity of the first vertex C1. The smaller the transmission ratio (Q2/P2, Q1/P1) of the force toward the lower lateral frame rib 220D, the wider the non-conductive region in which no longitudinal inner rib 310 exits between the lower specific lateral inner rib 320V and the lower lateral frame rib 220D, and no current path is formed.

The closer the non-conductive region is to the positive-side lug part 112P, the larger the electrical resistance of the grid 140 becomes. In the grid 140, the distance between the positive-side lug part 112P and the second vertex C2 is shorter than the distance between the positive-side lug part 112P and the first vertex C1. For this reason, the influence on the electrical resistance due to the decreased transmission ratio of the force toward the lower lateral frame rib 220D on the second vertex C2 side close to the positive-side lug part 112P is larger than the influence on the electrical resistance due to the decreased transmission rate of the force toward the lower lateral frame rib 220D on the first vertex C1 side far from the positive-side lug part 112P.

In the grid 140 of the present embodiment, the transmission ratio of the force toward the lower lateral frame rib 220D on the second vertex C2 side close to the positive-side lug part 112P is larger than the transmission rate of the force toward the lower lateral frame rib 220D on the first vertex C1 side far from the positive-side lug part 112P, and the non-conductive region is wide on the first vertex C1 side far from the positive-side lug part 112P. Thereby, an increase in the electrical resistance of the entire grid 140 can be prevented as compared to a case where the non-conductive region is wide on the second vertex C2 side close to the positive-side lug part 112P.

In the grid 140 of the present embodiment, the first continuous space E1 and the second continuous space E2 extend along the direction in which the upper lateral frame rib 220U with the positive-side lug part 112P formed thereon extends. Normally, in the grid 140, the active material is applied along the direction in which the frame rib with the lug part formed thereon extends. Therefore, as compared to a case where the first continuous space E1 and the second continuous space E2 extend in a direction intersecting the direction in which the active material is applied, the active material is sufficiently applied to each of the first continuous space E1 and the second continuous space E2, thus making it possible to prevent the active material from falling off.

A-5. First modification of present embodiment:

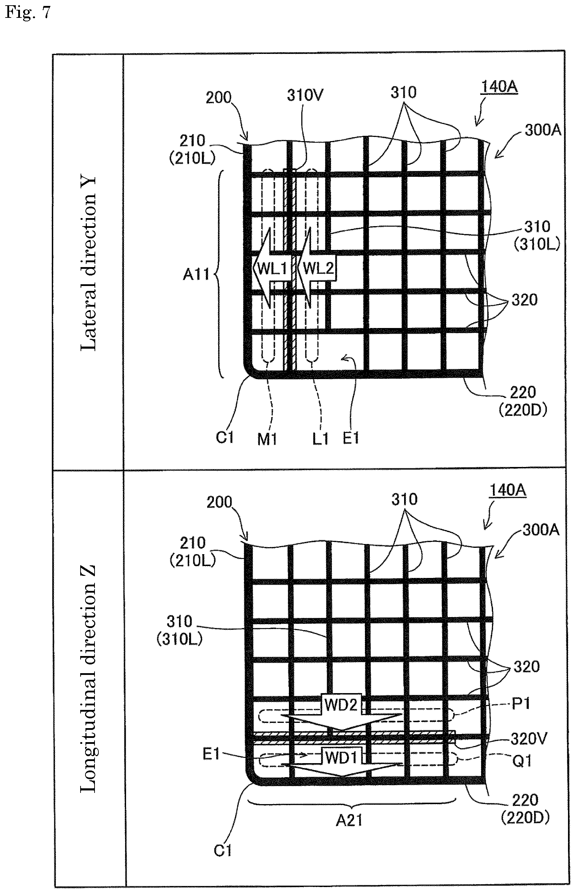

Fig. 7 is an explanatory view showing, in an enlarged manner, a YZ plane configuration of a portion in the vicinity of the first vertex C1 in a grid 140A of a first modification of the present embodiment. An inner part 300A of the grid 140A in the first modification of the present embodiment is different from the grid 140 of the embodiment described above in that the first and third longitudinal inner ribs 310 from the left longitudinal frame rib 210L are continuously connected from the upper lateral frame rib 220U to the lower lateral frame rib 220D as compared to the inner part 300 of the grid 140 of the present embodiment. That is, in the grid 140A of the first modification of the present embodiment, the first continuous space E1 exists at a position separated from the first vertex C1.

In the grid 140A of the first modification of the present embodiment, in the second longitudinal inner rib 310 from the left longitudinal frame rib 210L, a portion between the lower specific lateral inner rib 320V and the lower lateral frame rib 220D is absent, and the first continuous space E1 exists in the vicinity of the first vertex C1 due to the one absent longitudinal inner rib 310. In the grid 140A of the first modification of the present embodiment, as shown in the upper part of Fig. 7, concerning the lateral direction Y, the number L1 of lateral inner ribs 320 is five, and the number M1 of lateral inner ribs 320 is five. Further, as shown in the lower part of Fig. 7, concerning the longitudinal direction Z, the number P1 of longitudinal inner ribs 310 is five, and the number Q1 of longitudinal inner ribs 310 is four. Therefore, in the grid 140A of the first modification of the present embodiment, $(M1/L1) > (Q1/P1)$ holds, and the above relational expression (1) is satisfied, so that the deformation of the first vertex C1 can be prevented as compared to a case where the above relational expression (1) is not satisfied.

A-6. Second modification of present embodiment:

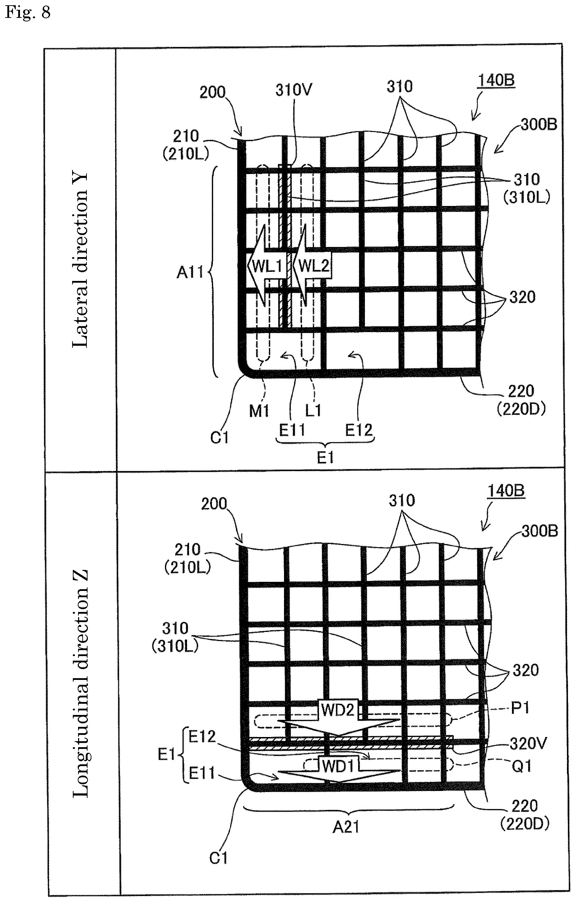

Fig. 8 is an explanatory view showing, in an enlarged manner, a YZ plane configuration of a portion in the vicinity of the first vertex C1 in a grid 140B of a second modification of the present embodiment. An inner part 300B of the grid 140B in the second modification of the present embodiment is different from the grid 140 of the embodiment described above in that the second longitudinal inner rib 310 from the left longitudinal frame rib 210L is continuously connected from the upper lateral frame rib 220U to the lower lateral frame rib 220D in comparison with the inner part 300 of the grid 140 of the present embodiment. That is, in the grid 140B of the second modification of the present embodiment, the first continuous space E1 is divided into two continuous spaces E11, E12 by the second longitudinal inner rib 310 from the left longitudinal frame rib 210L.

In the grid 140B of the second modification of the present embodiment, in each of the first and third longitudinal inner ribs 310 from the left longitudinal frame rib 210L, a portion between the lower specific lateral inner rib 320V and the lower lateral frame rib 220D is absent, and two continuous spaces E11, E12 exist in the vicinity of the first vertex C1 due to the partially absent longitudinal inner ribs 310. In the grid 140B of the second modification of the present embodiment, as shown in the upper part of Fig. 8, concerning the lateral direction Y, the number L1 of lateral inner ribs 320 is five, and the number M1 of lateral inner ribs 320 is five. Further, as shown in the lower part of Fig. 8, concerning the longitudinal direction Z, the number P1 of longitudinal inner ribs 310 is five, and the number Q1 of longitudinal inner ribs 310 is three. Therefore, in the grid 140B of the second modification of the present embodiment, $(M1/L1) > (Q1/P1)$ holds, and the above relational expression (1) is satisfied, so that the deformation of the first vertex C1 can be prevented as compared to a case where the above relational expression (1) is not satisfied.

A-7. Third modification of present embodiment:

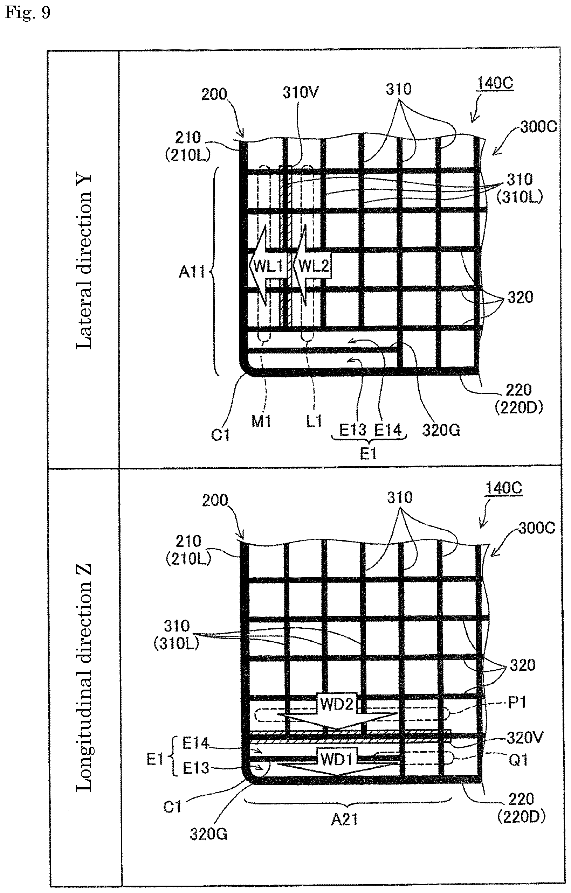

Fig. 9 is an explanatory view showing, in an enlarged manner, a YZ plane configuration of a portion in the vicinity of the first vertex C1 in a grid 140C of a third modification of the present embodiment. An inner part 300C of the grid 140C in the third modification of the present embodiment is different from the grid 140 in the embodiment described above in that a lateral inner rib 320 (hereinafter referred to as "additional lateral inner rib 320G) connecting the left longitudinal frame rib 210L and a fourth longitudinal inner rib 310 from the left longitudinal frame rib 210L exists in the first continuous space E1 in comparison with the inner part 300 of the grid 140 in the present embodiment. That is, in the grid 140C of the third modification of the present embodiment, the first continuous space E1 existing in the vicinity of the first vertex C1 is divided into two continuous spaces E13, E14 by the additional lateral inner rib 320G.

The additional lateral inner rib 320G is the lateral inner rib 320 closest to the lower lateral frame rib 220D. However, the additional lateral inner rib 320G is not connected to the ribs from the left longitudinal frame rib 210L to the third longitudinal inner rib 310, and does not extend over at least three longitudinal inner ribs 310. Hence the additional lateral inner rib 320G is not included in the L1 lateral inner ribs 320 and is not included in the M1 lateral inner rib 320 or the specific lateral inner rib 320V.

Thus, in the grid 140C of the third modification of the present embodiment, as in the grid 140 of the present embodiment, concerning the lateral direction Y, the number L1 of lateral inner ribs 320 is five, and the number M1 of lateral inner ribs 320 is five. (cf. the upper part of Fig. 9). Regarding the longitudinal direction Z, the number P1 of longitudinal inner ribs 310 is five, and the number Q1 of longitudinal inner ribs 310 is two (cf. the lower part of Fig. 9). Therefore, in the grid 140C of the third modification of the present embodiment, $(M1/L1) > (Q1/P1)$ holds, and the above relational expression (1) is satisfied, so that the deformation of the first vertex C1 can be prevented as compared to a case where the above relational expression (1) is not satisfied.

A-8. Fourth modification of present embodiment:

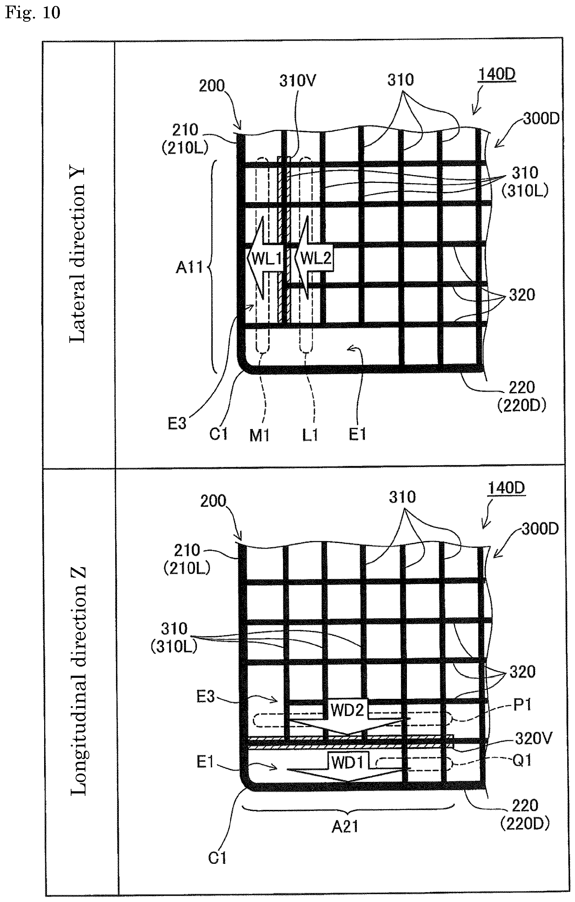

Fig. 10 is an explanatory view showing, in an enlarged manner, a YZ plane configuration of a portion in the vicinity of the first vertex C1 in a grid 140D of a fourth modification of the present embodiment. An inner part 300D of the grid 140D in the fourth modification of the present embodiment is different from the grid 140 in the embodiment described above in that a second lateral inner rib 320 from the lower lateral frame rib 220D is not connected to the left longitudinal frame rib 210L in comparison with the inner part 300 of the grid 140 in the present embodiment.

In the grid 140D of the fourth modification of the present embodiment, in the second lateral inner rib 320 from the lower lateral frame rib 220D, a portion between the left longitudinal frame rib 210L and the left specific longitudinal inner rib 310V is absent, and a third continuous space E3 exists in the vicinity of the first vertex C1 due to the one partially absent lateral inner rib 320. Therefore, in the grid 140D of the fourth modification of the present embodiment, as shown in the upper part of Fig. 10, concerning the lateral direction Y, the number L1 of lateral inner ribs 320 is five, and the number M1 of lateral inner ribs 320 is four. Further, as shown in the lower part of Fig. 10, concerning the longitudinal direction Z, the number P1 of longitudinal inner ribs 310 is five, and the number Q1 of longitudinal inner ribs 310 is two. Therefore, in the grid 140D of the fourth modification of the present embodiment, (M1/L1) > (Q1/P1) holds, and the above relational expression (1) is satisfied, so that the deformation of the first vertex C1 can be prevented as compared to a case where the above relational expression (1) is not satisfied.

A-9. Fifth modification of present embodiment:

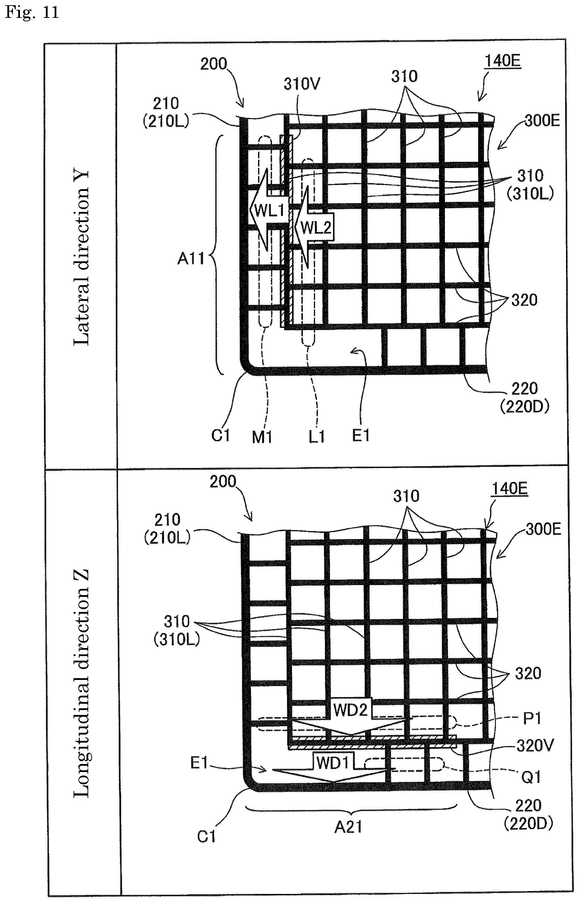

Fig. 11 is an explanatory view showing, in an enlarged manner, a YZ plane configuration of a portion in the vicinity of the first vertex C1 in a grid 140E of a fifth modification of the present embodiment. An inner part 300E of the grid 140E in the fifth modification of the present embodiment is different from the grid 140 of the present embodiment is that in comparison with the inner part 300 of the grid 140 of the embodiment described above, the lateral inner rib 320 connected to the left specific longitudinal inner rib 310V from the right side is not continuous with the lateral inner rib 320 located between the left longitudinal frame rib 210L and the left specific longitudinal inner rib 310V, and the longitudinal inner rib 310 connected to the lower specific lateral inner rib 320V from the upper side is not continuous with the longitudinal inner rib 310 located between the lower specific lateral inner rib 320V and the lower lateral frame rib 220D.

In the grid 140E of the fifth modification of the present embodiment, the M1 lateral inner ribs 320 and the L1 lateral inner ribs 320 are not connected and are shifted in the longitudinal direction Z. Similarly, the P1 longitudinal inner ribs 310 and the Q1 longitudinal inner ribs 310 are not connected and are shifted in the lateral direction Y. However, in the grid 140E of the fifth modification of the present embodiment, as in the grid 140 of the present embodiment, concerning the lateral direction Y, the number L1 of lateral inner ribs 320 is five, and the number M1 of lateral inner ribs 320 is five (cf. the upper part of Fig. 11). Regarding the longitudinal direction Z, the number P1 of longitudinal inner ribs 310 is five, and the number Q1 of longitudinal inner ribs 310 is two (cf. the lower part of Fig. 11). Therefore, in the grid 140E of the fifth modification of the present embodiment, (M1/L1) > (Q1/P1) holds, and the above relational expression (1) is satisfied, so that the deformation of the first vertex C1 can be prevented as compared to a case where the above relational expression (1) is not satisfied.

B. Modifications:

The technique disclosed in the present specification is not limited to the embodiment described above but can be modified into various forms without departing from the scope of the present invention, and for example, the following modifications are possible.

The configuration of the grid 140 in the above embodiment is merely an example, and various modifications can be made. For example, the example has been shown in the above embodiment where the lower end of the left partially absent longitudinal inner rib 310L extends to the lower specific lateral inner rib 320V and does not protrude into the first continuous space E1, but this is not restrictive For example, when the left partially absent longitudinal inner rib 310L is not connected to the lower lateral frame rib 220D, the lower end of the left partially absent longitudinal inner rib 310L may protrude into the first continuous space E 1.

In the above embodiment, the example has been shown where the first continuous space E1 is located between the left longitudinal frame rib 210L and the longitudinal inner rib 310 closest to the left longitudinal frame rib 210L among the Q1 longitudinal inner ribs 310, but this is not restrictive. For example, the first continuous space E1 may be located between two adjacent ones of the Q1 longitudinal inner ribs 310 in the lateral direction Y.

In the above embodiment, the example has been shown where in each of the three adjacent longitudinal inner ribs 310, the portion between the left longitudinal frame rib 210L and the left specific longitudinal inner rib 310V is absent to form the first continuous space E1, but the number of longitudinal inner rib 310 with the portion absent therefrom is not limited to this. For example, the number of longitudinal inner ribs 310 with the portion absent therefrom may be one or two, or may be four or more.

In the above embodiment, the example has been shown where the continuous space E is formed on both sides of the first vertex C1 side and the second vertex C2 side in the lower lateral frame rib 220D, but this is not restrictive. For example, the continuous space E may be formed only on the first vertex C1 side far from the positive-side lug part 112P.

In the above embodiment, the example has been shown where the continuous space E is formed facing the lower lateral frame rib 220D far from the positive-side lug part 112P, but this is not restrictive. For example, the continuous space E may be formed facing the upper lateral frame rib 220U close to the positive-side lug part 112P.

The continuous space E may be formed so as to face the left longitudinal frame rib 210L and extend in the axial direction of the left longitudinal frame rib 210L, or may be formed so as to face the right longitudinal frame rib 210R and extend in the axial direction of the right longitudinal frame rib 210R. In this case, the direction in which the continuous space E extends and the direction in which the active material is applied intersect, but the direction in which the continuous space E extends and the direction in which the active material is applied may intersect.

In the above embodiment, the example has been shown where the transmission ratio of the force toward the lower lateral frame rib 220D in the vicinity of the second vertex C2 is larger than the transmission ratio of the force toward the lower lateral frame rib 220D in the vicinity of the first vertex C1, but this is not restrictive. For example, the transmission ratio of the force toward the lower lateral frame rib 220D in the vicinity of the second vertex C2 may be substantially the same as or smaller than the transmission ratio of the force toward the lower lateral frame rib 220D in the vicinity of the first vertex C1.

In the above embodiment, the quadrangular frame 200 has been exemplified as a frame having four corners slightly rounded (having corners R), but this is not restrictive. For example, the four corners of the frame need not be rounded. In the above embodiment, the substantially rectangular frame has been exemplified as the quadrangular frame, but this is not restrictive. For example, the frame may have a trapezoidal shape or a parallelogram shape.

In the above embodiment, the example has been shown where the lateral inner rib 320 extends linearly and substantially parallel to the pair of lateral frame ribs 220, but this is not restrictive. For example, the lateral inner rib 320 may be inclined with respect to the pair of lateral frame ribs 220, or a part of the lateral inner rib 320 may be bent. That is, the lateral inner rib 320 may be inclined or bent so long as extending in the lateral direction Y as a whole. The same applies to the longitudinal inner rib 310. In the above embodiment, the plurality of lateral inner ribs 320 may be arranged at different intervals in the longitudinal direction Z. The same applies to the longitudinal inner rib 310. In addition, the plurality of longitudinal inner ribs 310, the array intervals, and the array intervals of the plurality of lateral inner ribs 320 may be different from each other.

That the first inner rib in the claims "extends toward the first frame rib" refers to that a straight line extending from a portion closest to the first frame rib along the axial direction of the portion among the first inner ribs intersects with the first frame rib. That the second inner rib in the claims "extends toward the second frame rib" refers to that a straight line extending from a portion closest to the second frame rib along the axial direction of the portion among the second inner ribs intersects with the second frame rib. That the third inner rib in the claims "extends toward the third frame rib" refers to that a straight line extending from a portion closest to the third frame rib along the axial direction of the portion among the third inner ribs intersects with the third frame rib. In the above embodiment, the lateral inner rib 320 corresponding to both the first inner rib and the third inner rib in the claims has been exemplified, but this is not restrictive, and the first inner rib and the third inner rib in the claims may be configured to correspond to separate inner ribs. For example, the inner rib corresponding to the first inner rib may be an inner rib extending toward the first frame rib, but not extending toward the third frame rib, and the inner rib corresponding to the third inner rib may be an inner rib extending toward the third frame rib but not extending toward the first frame rib.

In the above embodiment, the example has been shown where the plurality of lateral inner ribs 320 are substantially parallel to each other, but this is not restrictive. At least two lateral inner ribs 320 of the plurality of lateral inner ribs 320 may be oriented in different directions. The same applies to the plurality of longitudinal inner ribs 310.

In the above embodiment, the example has been shown where the lateral inner rib 320 is disposed so as to be substantially orthogonal to at least one of the pair of longitudinal frame ribs 210, but this is not restrictive. The lateral inner rib 320 may be disposed so as not to be substantially orthogonal to either of the pair of longitudinal frame ribs 210. The same applies to the longitudinal inner rib 310.

In the above embodiment, the example has been shown where, the relational expressions shown in (1) and (K1) hold for L1, M1, P1, and Q1 of the grid 140, but the relational expression shown in (K1) does not necessarily need to hold so long as the relational expression shown in (1) holds. Similarly, in the above embodiment, the example has been shown where, the relational expressions shown in (2) and (K2) hold for L2, M2, P2, and Q2 of the grid 140, but the relational expression shown in (K2) does not necessarily need to hold so long as the relational expression shown in (2) holds.

DESCRIPTION OF REFERENCE SIGNS

22: container
24: lid
24A: communication hole
26N: negative electrode terminal part

26P: positive electrode terminal part
28N: bushing
28P: bushing
28NA: through-hole
30N: pole
30P: pole
100: lead-acid battery
102: battery casing
104: element
106N: negative-side strap
106P: positive-side strap
110: plate
110N: negative electrode plate
110P: positive electrode plate
112N: negative-side lug part
112P: positive-side lug part
114: connecting member
120: separator
140: grid
200: frame
210: longitudinal frame rib
210L: left longitudinal frame rib
210R: right longitudinal frame rib
220: lateral frame rib
220D: lower lateral frame rib
220U: upper lateral frame rib
300: inner part
310: longitudinal inner rib
310G: basic longitudinal inner rib
310L: left partially absent longitudinal inner rib
310R: right partially absent longitudinal inner rib
310V: specific longitudinal inner rib
320: lateral inner rib
320G: additional lateral rib
320V: specific lateral inner rib
A11, A21: first vertex-side portion
A22, A31: second vertex-side portion
C: vertex
C1: first vertex
C2: second vertex
C3: third vertex
C4: fourth vertex
D: array interval
E: continuous space
E1: continuous space
E2: continuous space
S: accommodation space
U: electrolyte solution

**Claims**

1. A lead-acid battery grid (140, 140A, 140B, 140C, 140D, 140E), comprising:

a quadrangular frame (200) including a first frame rib (210) with a length F1 that extends in a first direction (Z) and a second frame rib (220) with a length F2 that extends in a second direction (Y) intersecting the first direction (Z) and is connected with the first frame rib (210) at a first vertex (C1); and
an inner part (300) disposed on an inner peripheral side of the frame (200), and including a plurality of first inner ribs (320) that extend toward the first frame rib (210), and a plurality second inner ribs (310) that extend toward the second frame rib (220), wherein

L1 is the number of first inner ribs (320) (L1 is an integer of 2 or more), extending toward a first vertex-side portion (A11) of the first frame rib (210) among the first frame ribs (210), that is a portion from a position of the first vertex (C1) to a position separated by a first reference length being shorter than both a half of the length F1 and a half of the length F2, the first inner ribs (320) extending over at least three of the second inner ribs (310),

M1 is the number of first inner ribs (320) (M1 is an integer of 1 or more), being located between a specific second inner rib (310V) that is closest to the first frame rib (210) among the at least three of the second inner ribs (310) and the first vertex-side portion (A11) of the first frame rib (210), and being connected to both the specific second inner rib (310V) and the first vertex-side portion (A11) of the first frame rib (210),

P1 is the number of second inner ribs (310) (P1 is an integer of 2 or more), extending toward a first vertex-side portion (A21) of the second frame rib (220) among the second frame ribs (220), that is a portion from a position of the first vertex (C1) to a position separated by the first reference length, and extending over at least three of the first inner ribs (320),

Q1 is the number of second inner ribs (310) (Q1 is an integer of 1 or more and smaller than P1), being located between a specific first inner rib (320V) that is closest to the second frame rib (220) among the at least three of the first inner ribs (320) and the first vertex-side portion (A21) of the second frame rib (220), and being connected to both the specific first inner rib (320V) and the first vertex-side portion (A21) of the second frame rib (220), and a relational expression shown in (1) below holds.

$$(M1/L1) > (Q1/P1) \quad (1)$$

2. The lead-acid battery grid (140, 140A, 140B, 140C, 140D, 140E) according to claim 1, wherein

in a view along the second direction (Y), at least some of the M1 first inner ribs (320) are located on the second frame rib side with respect to a center (A11M) of the first vertex-side portion (A11) of the first frame rib (210), and in a view along the first direction (Z), all the Q1 second inner ribs (310) are located on a side opposite to the first frame rib (210) with respect to a center (A21M) of the first vertex-side portion (A21) of the second frame rib (220).

3. The lead-acid battery grid (140, 140A, 140B, 140C, 140D, 140E) according to claim 1 or claim 2, wherein in the view along the first direction (Z), at least two or more second inner ribs (310) of the P1 second inner ribs (310) are located in at least one of a position between the first frame rib (210) and one of the Q1 second inner ribs (310), adjacent to each other in the second direction (Y), and a position between two adjacent second inner ribs (310) of the Q1 second inner ribs (310).

4. The lead-acid battery grid (140, 140A, 140B, 140C, 140D, 140E) according to any one of claims 1 to 3, wherein in the view along the first direction (Z), (P1 - Q1) second inner ribs (310) of the P1 second inner ribs (310) are located in at least one of a position between the first frame rib (210) and one of the Q1 second inner ribs (310), adjacent to each other in the second direction (Y), and a position between two adjacent second inner ribs (310) of the Q1 second inner ribs (310).

5. The lead-acid battery grid (140, 140A, 140B, 140C, 140D, 140E) according to any one of claims 1 to 4, wherein

the frame (200) further includes a third frame rib (210R) with a third length F3 that faces the first frame rib (210L) and is connected with the second frame rib (220) at a second vertex (C2),
the inner part (300) further includes a plurality of third inner ribs extending toward the third frame rib (210R),
the number of the third inner ribs is L2 (L2 is an integer of 2 or more), the third inner ribs extending toward a second vertex-side portion (A31) of the third frame rib (210R) that is a portion from a position of the second vertex (C2) to a position separated by a second reference length being shorter than both a half of the length F2 and a half of the length F3 among the third frame ribs (210R), the third inner ribs extending over at least three of the second inner ribs (310),
the number of the third inner ribs is M2 (M2 is an integer of 1 or more), the third inner ribs being located between a specific fourth inner rib (310V) that is closest to the third frame rib (210R) among the at least three of the second inner ribs (310) and the second vertex-side portion (A31) of the third frame rib (210R), and connected to both the specific fourth inner rib (310V) and the second vertex-side portion (A31) of the third frame rib (210R),
the number of the second inner ribs (310) is P2 (P2 is an integer of 2 or more), the second inner ribs (310) extending toward a second vertex-side portion (A22) of the second frame rib (220) among the second frame ribs (220), that is a portion from a position of the second vertex (C2) to a position separated by the second reference length, and extending over at least three of the third inner ribs,
the number of the second inner ribs (310) is Q2 (Q2 is an integer of 1 or more and less than P2), the second inner ribs (310) being located between a specific third inner rib (320V) that is closest to the second frame rib (220) among the at least three of the third inner ribs and the second vertex-side portion (A22) of the second frame rib (220), and being connected to both the specific third inner rib (320V) and the second vertex-side portion (A22) of the second frame rib (220), and
a relational expression shown in (2) below holds.

$$(M2/L2) > (Q2/P2) \quad (2)$$

6. The lead-acid battery grid (140, 140A, 140B, 140C, 140D, 140E) according to claim 5, wherein

the frame (200) further includes a fourth frame rib (220U) facing the second frame rib (220D) and connected with the third frame rib (210R) at a third vertex (C3),
the lead-acid battery grid (140, 140A, 140B, 140C, 140D, 140E) further comprises a current collector (112P, 112N) formed between a center in the second direction (Y) and the third vertex (C3) in the fourth frame rib, and
a relational expression shown in (3) below holds.

$$(Q2/P2) > (Q1/P1) \quad (3)$$

7. The lead-acid battery grid (140, 140A, 140B, 140C, 140D, 140E) according to any one of claims 1 to 6, wherein

the frame (200) further includes a fourth frame rib (220U) facing the second frame rib (220D) and extending in the second direction (Y), and
the lead-acid battery grid (140, 140A, 140B, 140C, 140D, 140E) further comprises a current collector (112P, 112N) formed on one of the second frame rib (220D) and the fourth frame rib (220U).

8. The lead-acid battery grid (140, 140A, 140B, 140C, 140D, 140E) according to any one of claims 1 to 7, wherein

the plurality of first inner ribs (320) are substantially parallel to each other, and
the plurality of second inner ribs (310) are substantially parallel to each other.

9. A lead-acid battery comprising:

a positive electrode plate (110P);
a negative electrode plate (110N); and
a separator (120) disposed between the positive electrode plate (110P) and the negative electrode plate (110N), wherein
at least one of the positive electrode plate (110P) and the negative electrode plate (110N) includes the lead-acid battery grid (140, 140A, 140B, 140C, 140D, 140E) according to any one of claims 1 to 8, and an active material applied to the lead-acid battery grid (140, 140A, 140B, 140C, 140D, 140E).

**Patentansprüche**

1. Blei-Säure-Batterie-Gitter (140, 140A, 140B, 140C, 140D, 140E), umfassend:

einen viereckigen Rahmen (200), der eine erste Rahmenrippe (210) mit einer Länge F1 aufweist, die sich in einer ersten Richtung (Z) erstreckt, und eine zweite Rahmenrippe (220) mit einer Länge F2 aufweist, die sich in einer zweiten Richtung (Y) erstreckt, die die erste Richtung (Z) schneidet, und mit der ersten Rahmenrippe (210) an einem ersten Scheitelpunkt (C1) verbunden ist; und
einen inneren Teil (300), der an einer Innenumfangsseite des Rahmens (200) angeordnet ist und mehrere erste innere Rippen (320) aufweist, die sich in Richtung der ersten Rahmenrippe (210) erstrecken, und mehrere zweite innere Rippen (310) aufweist, die sich in Richtung der zweiten Rahmenrippe (220) erstrecken, wobei
L1 die Anzahl der ersten inneren Rippen (320) ist (L1 ist eine ganze Zahl von 2 oder mehr), die sich in Richtung eines ersten scheitelseitigen Abschnitts (A11) der ersten Rahmenrippe (210) unter den ersten Rahmenrippen (210) erstrecken, der ein Abschnitt von einer Position des ersten Scheitels (C1) zu einer Position ist, die durch eine erste Referenzlänge getrennt ist, die kürzer als sowohl eine Hälfte der Länge F1 als auch eine Hälfte der Länge F2 ist, wobei sich die ersten inneren Rippen (320) über mindestens drei der zweiten inneren Rippen (310) erstrecken,

M1 die Anzahl der ersten inneren Rippen (320) ist (M1 ist eine ganze Zahl von 1 oder mehr), die zwischen einer spezifischen zweiten inneren Rippe (310V), die der ersten Rahmenrippe (210) unter den mindestens drei der zweiten inneren Rippen (310) am nächsten liegt, und dem ersten scheitelseitigen Abschnitt (A11) der ersten Rahmenrippe (210) angeordnet sind, und die sowohl mit der spezifischen zweiten inneren Rippe (310V) als auch dem ersten scheitelseitigen Abschnitt (A11) der ersten Rahmenrippe (210) verbunden sind,

P1 die Anzahl der zweiten inneren Rippen (310) ist (P1 ist eine ganze Zahl von 2 oder mehr), die sich in Richtung eines ersten scheitelseitigen Abschnitts (A21) der zweiten Rahmenrippe (220) unter den zweiten Rahmenrippen (220) erstrecken, der ein Abschnitt von einer Position des ersten Scheitels (C1) zu einer Position ist, die durch die erste Referenzlänge getrennt ist, und sich über mindestens drei der ersten inneren Rippen (320) erstrecken,

Q1 die Anzahl der zweiten inneren Rippen (310) ist (Q1 ist eine ganze Zahl von 1 oder mehr und kleiner als P1), die zwischen einer spezifischen ersten inneren Rippe (320V), die der zweiten Rahmenrippe (220) unter den mindestens drei der ersten inneren Rippen (320) am nächsten liegt, und dem ersten scheitelseitigen Abschnitt (A21) der zweiten Rahmenrippe (220) angeordnet sind, und sowohl mit der spezifischen ersten inneren Rippe (320V) als auch dem ersten scheitelseitigen Abschnitt (A21) der zweiten Rahmenrippe (220) verbunden sind, und

der unten in (1) gezeigte relationale Ausdruck gilt:

$$(M1/L1) > (Q1/P1) \qquad (1)$$

2. Blei-Säure-Batterie-Gitter (140, 140A, 140B, 140C, 140D, 140E) nach Anspruch 1, wobei

in einer Ansicht entlang der zweiten Richtung (Y) mindestens einige der M1 ersten inneren Rippen (320) auf der Seite der zweiten Rahmenrippen in Bezug auf eine Mitte (A11M) des ersten scheitelseitigen Abschnitts (A11) der ersten Rahmenrippe (210) angeordnet sind und

in einer Ansicht entlang der ersten Richtung (Z) alle Q1 zweiten inneren Rippen (310) auf einer Seite gegenüber der ersten Rahmenrippe (210) in Bezug auf eine Mitte (A21M) des ersten scheitelseitigen Abschnitts (A21) der zweiten Rahmenrippe (220) angeordnet sind.

3. Blei-Säure-Batterie-Gitter (140, 140A, 140B, 140C, 140D, 140E) nach Anspruch 1 oder Anspruch 2, wobei in der Ansicht entlang der ersten Richtung (Z) mindestens zwei oder mehr zweite innere Rippen (310) der P1 zweiten inneren Rippen (310) in mindestens einer von einer Position zwischen der ersten Rahmenrippe (210) und einer der Q1 zweiten inneren Rippen (310), die in der zweiten Richtung (Y) nebeneinander liegen, und einer Position zwischen zwei benachbarten zweiten inneren Rippen (310) der Q1 zweiten inneren Rippen (310) angeordnet sind.

4. Blei-Säure-Batterie-Gitter (140, 140A, 140B, 140C, 140D, 140E) nach einem der Ansprüche 1 bis 3, wobei in der Ansicht entlang der ersten Richtung (Z) (P1-Q1) zweite innere Rippen (310) der P1 zweiten inneren Rippen (310) in mindestens einer von einer Position zwischen der ersten Rahmenrippe (210) und einer der Q1 zweiten inneren Rippen (310), die in der zweiten Richtung (Y) nebeneinander liegen, und einer Position zwischen zwei benachbarten zweiten inneren Rippen (310) der Q1 zweiten inneren Rippen (310) angeordnet sind.

5. Blei-Säure-Batterie-Gitter (140, 140A, 140B, 140C, 140D, 140E) nach einem der Ansprüche 1 bis 4, wobei der Rahmen (200) des Weiteren eine dritte Rahmenrippe (210R) mit einer dritten Länge F3 aufweist, die der ersten Rahmenrippe (2101) zugewandt ist und mit der zweiten Rahmenrippe (220) an einem zweiten Scheitelpunkt (C2) verbunden ist,

der innere Teil (300) des Weiteren mehrere dritte innere Rippen aufweist, die sich in Richtung der dritten Rahmenrippe (210R) erstrecken,
die Anzahl der dritten inneren Rippen L2 ist (L2 ist eine ganze Zahl von 2 oder mehr), wobei sich die dritten inneren Rippen in Richtung eines zweiten scheitelseitigen Abschnitts (A31) der dritten Rahmenrippe (210R) erstrecken, der ein Abschnitt von einer Position des zweiten Scheitels (C2) zu einer Position ist, die durch eine zweite Referenzlänge getrennt ist, die kürzer als sowohl eine Hälfte der Länge F2 als auch eine Hälfte der Länge F3 unter den dritten Rahmenrippen (210R) ist, wobei sich die dritten inneren Rippen über mindestens drei der zweiten inneren Rippen (310) erstrecken,

die Anzahl der dritten inneren Rippen M2 ist (M2 ist eine ganze Zahl von 1 oder mehr), wobei die dritten inneren Rippen zwischen einer spezifischen vierten inneren Rippe (310V), die der dritten Rahmenrippe (210R) unter den mindestens drei der zweiten inneren Rippen (310) am nächsten liegt, und dem zweiten scheitelseitigen Abschnitt (A31) der dritten Rahmenrippe (210R) angeordnet sind und sowohl mit der spezifischen vierten inneren Rippe (310V) als auch dem zweiten scheitelseitigen Abschnitt (A31) der dritten Rahmenrippe (210R) verbunden sind, die Anzahl der zweiten inneren Rippen (310) P2 ist (P2 ist eine ganze Zahl von 2 oder mehr), wobei sich die zweiten inneren Rippen (310) in Richtung eines zweiten scheitelseitigen Abschnitts (A22) der zweiten Rahmenrippe (220) unter den zweiten Rahmenrippen (220) erstrecken, der ein Abschnitt von einer Position des zweiten Scheitels (C2) zu einer Position ist, die durch die zweite Referenzlänge getrennt ist, und sich über mindestens drei der dritten inneren Rippen erstrecken,

die Anzahl der zweiten inneren Rippen (310) Q2 ist (Q2 ist eine ganze Zahl von 1 oder mehr und kleiner als P2), wobei die zweiten inneren Rippen (310) zwischen einer spezifischen dritten inneren Rippe (320V), die der zweiten Rahmenrippe (220) unter den mindestens drei der dritten inneren Rippen am nächsten liegt, und dem zweiten scheitelseitigen Abschnitt (A22) der zweiten Rahmenrippe (220) angeordnet sind, und sowohl mit der spezifischen dritten inneren Rippe (320V) als auch dem zweiten scheitelseitigen Abschnitt (A22) der zweiten Rahmenrippe (220) verbunden sind, und

der unten in (2) gezeigte relationale Ausdruck gilt:

$$(M2/L2) > (Q2/P2) \quad (2)$$

6. Blei-Säure-Batterie-Gitter (140, 140A, 140B, 140C, 140D, 140E) nach Anspruch 5, wobei

der Rahmen (200) des Weiteren eine vierte Rahmenrippe (220U) aufweist, die der zweiten Rahmenrippe (220D) zugewandt ist und mit der dritten Rahmenrippe (210R) an einem dritten Scheitelpunkt (C3) verbunden ist, das Blei-Säure-Batterie-Gitter (140, 140A, 140B, 140C, 140D, 140E) des Weiteren einen Stromkollektor (112P, 112N) umfasst, der zwischen einer Mitte in der zweiten Richtung (Y) und dem dritten Scheitelpunkt (C3) in der vierten Rahmenrippe ausgebildet ist, und
der unten in (3) gezeigte relationale Ausdruck gilt:

$$(Q2/P2) > (Q1/P1) \quad (3)$$

7. Blei-Säure-Batterie-Gitter (140, 140A, 140B, 140C, 140D, 140E) nach einem der Ansprüche 1 bis 6, wobei

der Rahmen (200) des Weiteren eine vierte Rahmenrippe (220U) aufweist, die der zweiten Rahmenrippe (220D) zugewandt ist und sich in der zweiten Richtung (Y) erstreckt, und
das Blei-Säure-Batterie-Gitter (140, 140A, 140B, 140C, 140D, 140E) des Weiteren einen Stromkollektor (112P, 112N) umfasst, der auf einer der zweiten Rahmenrippe (220D) und der vierten Rahmenrippe (220U) ausgebildet ist.

8. Blei-Säure-Batterie-Gitter (140, 140A, 140B, 140C, 140D, 140E) nach einem der Ansprüche 1 bis 7, wobei

die mehreren ersten inneren Rippen (320) im Wesentlichen parallel zueinander verlaufen und
die mehreren zweiten inneren Rippen (310) im Wesentlichen parallel zueinander verlaufen.

9. Blei-Säure-Batterie, umfassend:

eine positive Elektrodenplatte (110P);
eine negative Elektrodenplatte (110N); und
einen Separator (120), der zwischen der positiven Elektrodenplatte (110P) und der negativen Elektrodenplatte (110N) angeordnet ist, wobei
mindestens eine der positiven Elektrodenplatte (110P) und der negativen Elektrodenplatte (110N) das Blei-Säure-Batterie-Gitter (140, 140A, 140B, 140C, 140D, 140E) nach einem der Ansprüche 1 bis 8 und ein auf das Blei-Säure-Batterie-Gitter (140, 140A, 140B, 140C, 140D, 140E) aufgebrachtes aktives Material aufweist.

**Revendications**

1. Grille de batterie au plomb (140, 140A, 140B, 140C, 140D, 140E), comprenant :

   un cadre quadrangulaire (200) incluant une première nervure de cadre (210) ayant une longueur F1 qui s'étend dans une première direction (Z) et une deuxième nervure de cadre (220) ayant une longueur F2 qui s'étend dans une seconde direction (Y) coupant la première direction (Z) et qui est reliée à la première nervure de cadre (210) au niveau d'un premier sommet (C1) ; et

   une partie interne (300) disposée sur un côté périphérique interne du cadre (200), et incluant une pluralité de premières nervures internes (320) qui s'étendent vers la première nervure de cadre (210), et une pluralité de deuxièmes nervures internes (310) qui s'étendent vers la deuxième nervure de cadre (220), dans laquelle L1 est le nombre de premières nervures internes (320) (L1 est un nombre entier de 2 ou plus) s'étendant vers une première partie côté sommet (A11) de la première nervure de cadre (210) parmi les premières nervures de cadre (210), c'est-à-dire une partie allant d'une position du premier sommet (C1) à une position séparée par une première longueur de référence qui est plus courte à la fois qu'une moitié de la longueur F1 et qu'une moitié de la longueur F2, les premières nervures internes (320) s'étendant sur au moins trois des deuxièmes nervures internes (310),

   M1 est le nombre de premières nervures internes (320) (M1 est un nombre entier de 1 ou plus) situées entre une deuxième nervure interne spécifique (310V) qui est la plus proche de la première nervure de cadre (210) parmi les au moins trois des deuxièmes nervures internes (310) et la première partie côté sommet (A11) de la première nervure de cadre (210), et étant reliées à la fois à la deuxième nervure interne spécifique (310V) et à la première partie côté sommet (A11) de la première nervure de cadre (210),

   P1 est le nombre de deuxièmes nervures internes (310) (P1 est un nombre entier de 2 ou plus) s'étendant vers une première partie côté sommet (A21) de la deuxième nervure de cadre (220) parmi les deuxièmes nervures de cadre (220), qui est une partie allant d'une position du premier sommet (C1) à une position séparée par la première longueur de référence, et s'étendant sur au moins trois des premières nervures internes (320),

   Q1 est le nombre de deuxièmes nervures internes (310) (Q1 est un nombre entier supérieur ou égal à 1 et inférieur à P1), situées entre une première nervure interne spécifique (320V) qui est la plus proche de la deuxième nervure de cadre (220) parmi les au moins trois des premières nervures internes (320) et la première partie côté sommet (A21) de la deuxième nervure de cadre (220), et étant reliées à la fois à la première nervure interne spécifique (320V) et à la première partie côté sommet (A21) de la deuxième nervure de cadre (220), et

   une expression relationnelle présentée en (1) ci-dessous s'applique.

   $$(M1/L1) > (Q1/P1) \quad (1)$$

2. Grille de batterie au plomb (140, 140A, 140B, 140C, 140D, 140E) selon la revendication 1, dans laquelle

   dans une vue le long de la seconde direction (Y), au moins certaines des M1 premières nervures internes (320) sont situées du côté de la deuxième nervure de cadre par rapport à un centre (A11M) de la première partie côté sommet (A11) de la première nervure de cadre (210), et

   dans une vue le long de la première direction (Z), toutes les Q1 deuxièmes nervures internes (310) sont situées sur un côté opposé à la première nervure de cadre (210) par rapport à un centre (A21M) de la première partie côté sommet (A21) de la deuxième nervure de cadre (220).

3. Grille de batterie au plomb (140, 140A, 140B, 140C, 140D, 140E) selon la revendication 1 ou la revendication 2, dans laquelle dans la vue le long de la première direction (Z), au moins deux deuxièmes nervures internes (310) ou plus des P1 deuxièmes nervures internes (310) sont situées dans au moins l'une d'une position entre la première nervure de cadre (210) et l'une des Q1 deuxièmes nervures internes (310), adjacentes l'une à l'autre dans la seconde direction (Y), et d'une position entre deux deuxièmes nervures internes adjacentes (310) des Q1 deuxièmes nervures internes (310).

4. Grille de batterie au plomb (140, 140A, 140B, 140C, 140D, 140E) selon l'une quelconque des revendications 1 à 3, dans laquelle, dans la vue le long de la première direction (Z), (P1 - Q1) deuxièmes nervures internes (310) des P1 deuxièmes nervures internes (310) sont situées dans au moins l'une d'une position entre la première nervure de cadre (210) et l'une des Q1 deuxièmes nervures internes (310), adjacentes l'une à l'autre dans la seconde direction (Y), et d'une position entre deux deuxièmes nervures internes adjacentes (310) des Q1 deuxièmes nervures internes (310).

**5.** Grille de batterie au plomb (140, 140A, 140B, 140C, 140D, 140E) selon l'une quelconque des revendications 1 à 4, dans laquelle

le cadre (200) inclut en outre une troisième nervure de cadre (210R) avec une troisième longueur F3 qui fait face à la première nervure de cadre (210L) et est reliée à la deuxième nervure de cadre (220) au niveau d'un deuxième sommet (C2),

la partie interne (300) inclut en outre une pluralité de troisièmes nervures internes s'étendant vers la troisième nervure de cadre (210R),

le nombre des troisièmes nervures internes est L2 (L2 est un nombre entier de 2 ou plus), les troisièmes nervures internes s'étendant vers une seconde partie côté sommet (A31) de la troisième nervure de cadre (210R) qui est une partie allant d'une position du deuxième sommet (C2) à une position séparée par une deuxième longueur de référence qui est plus courte à la fois qu'une moitié de la longueur F2 et qu'une moitié de la longueur F3 parmi les troisièmes nervures de cadre (210R), les troisièmes nervures internes s'étendant sur au moins trois des deuxièmes nervures internes (310),

le nombre des troisièmes nervures internes est M2 (M2 est un nombre entier de 1 ou plus), les troisièmes nervures internes étant situées entre une quatrième nervure interne spécifique (310V) qui est la plus proche de la troisième nervure de cadre (210R) parmi les au moins trois des deuxièmes nervures internes (310) et la seconde partie côté sommet (A31) de la troisième nervure de cadre (210R), et reliées à la fois à la quatrième nervure interne spécifique (310V) et à la seconde partie côté sommet (A31) de la troisième nervure de cadre (210R),

le nombre des deuxièmes nervures internes (310) est P2 (P2 est un nombre entier de 2 ou plus), les deuxièmes nervures internes (310) s'étendant vers une seconde partie côté sommet (A22) de la deuxième nervure de cadre (220) parmi les deuxièmes nervures de cadre (220), qui est une partie allant d'une position du deuxième sommet (C2) à une position séparée par la deuxième longueur de référence, et s'étendant sur au moins trois des troisièmes nervures internes,

le nombre des deuxièmes nervures internes (310) est Q2 (Q2 est un nombre entier supérieur ou égal à 1 et inférieur à P2), les deuxièmes nervures internes (310) étant situées entre une troisième nervure interne spécifique (320 V) qui est la plus proche de la deuxième nervure de cadre (220) parmi les au moins trois des troisièmes nervures internes et la seconde partie côté sommet (A22) de la deuxième nervure de cadre (220), et étant reliées à la fois à la troisième nervure interne spécifique (320 V) et à la seconde partie côté sommet (A22) de la deuxième nervure de cadre (220), et

une expression relationnelle présentée en (2) ci-dessous s'applique.

$$(M2/L2) > (Q2/P2) \quad (2)$$

**6.** Grille de batterie au plomb (140, 140A, 140B, 140C, 140D, 140E) selon la revendication 5, dans laquelle

le cadre (200) inclut en outre une quatrième nervure de cadre (220U) faisant face à la deuxième nervure de cadre (220D) et reliée à la troisième nervure de cadre (210R) au niveau d'un troisième sommet (C3),

la grille de batterie au plomb (140, 140A, 140B, 140C, 140D, 140E) comprend en outre un collecteur de courant (112P, 112N) formé entre un centre dans la seconde direction (Y) et le troisième sommet (C3) dans la quatrième nervure de cadre, et

une expression relationnelle présentée en (3) ci-dessous s'applique.

$$(Q2/P2) > (Q1/P1) \quad (3)$$

**7.** Grille de batterie au plomb (140, 140A, 140B, 140C, 140D, 140E) selon l'une quelconque des revendications 1 à 6, dans laquelle

le cadre (200) inclut en outre une quatrième nervure de cadre (220U) faisant face à la deuxième nervure de cadre (220D) et s'étendant dans la seconde direction (Y), et

la grille de batterie au plomb (140, 140A, 140B, 140C, 140D, 140E) comprend en outre un collecteur de courant (112P, 112N) formé sur l'une de la deuxième nervure de cadre (220D) et de la quatrième nervure de cadre (220U).

**8.** Grille de batterie au plomb (140, 140A, 140B, 140C, 140D, 140E) selon l'une quelconque des revendications 1 à 7, dans laquelle

la pluralité de premières nervures internes (320) sont sensiblement parallèles les unes aux autres, et

la pluralité de deuxièmes nervures internes (310) sont sensiblement parallèles les unes aux autres.

9. Batterie au plomb comprenant :

une plaque d'électrode positive (110P) ;
une plaque d'électrode négative (110N) ; et
un séparateur (120) disposé entre la plaque d'électrode positive (110P) et la plaque d'électrode négative (110N), dans laquelle
au moins l'une parmi la plaque d'électrode positive (110P) et la plaque d'électrode négative (110N) inclut la grille de batterie au plomb (140, 140A, 140B, 140C, 140D, 140E) selon l'une quelconque des revendications 1 à 8, et
une matière active appliquée à la grille de batterie au plomb (140, 140A, 140B, 140C, 140D, 140E).

Fig. 1

Fig. 2

Fig. 3

Fig. 4

Fig. 5

Fig. 6

Fig. 7

Fig. 8

Fig. 9

Fig. 10

Fig. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013016499 A
- CN 202817102 U
- JP S6084770 A
- JP S5386329 U
- DE 1102008029386 A